# EUROPÄISCHE PATENTSCHRIFT

(11) **EP 3 794 049 B1**
(45) Veröffentlichungstag und Bekanntmachung des Hinweises auf die Patenterteilung: **08.06.2022**
(21) Anmeldenummer: 19722642.6
(22) Anmeldetag: 13.05.2019
(51) Int. Cl.: C08G 18/72, C08G 18/73, C08G 18/75, C08G 18/79, C08G 18/09, C08G 18/16, C08G 18/18, C08G 18/22, C08J 5/04

(54) **VERFAHREN ZUR HERSTELLUNG EINES POLYISOCYANATPOLYMERS UND EINES POLYISOCYANURATKUNSTSTOFFS**
METHOD FOR PRODUCING A POLYISOCYANATE POLYMER AND A POLYISOCYANURATE PLASTIC
PROCÉDÉ DE FABRICATION D'UN POLYMÈRE POLYISOCYANATE ET D'UNE MATIÈRE PLASTIQUE DE POLYISOCYANURATE

(30) Priorität: 17.05.2018 EP 18172967
(43) Veröffentlichungstag der Anmeldung: 24.03.2021
(73) Patentinhaber: Covestro Intellectual Property GmbH & Co. KG, 51373 Leverkusen (DE)
(72) Erfinder: HOCKE, Heiko, 51375 Leverkusen (DE); MATNER, Mathias, 41464 Neuss (DE); ACHTEN, Dirk, 51375 Leverkusen (DE); LAAS, Hans-Josef, 51519 Odenthal (DE); MAGER, Dieter, 51373 Leverkusen (DE)
(74) Vertreter: Levpat
(86) Internationale Anmeldenummer: PCT/EP2019/062202
(87) Internationale Veröffentlichungsnummer: WO 2019/219603

(56) Entgegenhaltungen:
- EP-A1- 3 162 548
- US-A1- 2004 106 762

## Beschreibung

Die Erfindung betrifft ein Verfahren zur Herstellung eines Polyisocyanatpolymers sowie das aus dem Verfahren erhältliche Polyisocyanatpolymer und dessen Verwendung als Teil eines zweistufigen Verfahrens zur Herstellung eines Polyisocyanuratkunststoffs, insbesondere zur Herstellung von Beschichtungen, Folien, Halbzeugen oder Formteilen enthaltend einen solchen Polyisocyanuratkunststoff.

Zweistufige Vernetzungsreaktionen zur Herstellung von Polymerwerkstoffen sind in verschiedenen Bereichen wie z.B. für die Herstellung von Beschichtungen, Folien oder auch Formteilen interessant. Idealerweise erlaubt hierbei die erste Reaktionsstufe eine definierte Vorvernetzung zu einem Präpolymer, das in einer zweiten Stufe vollständig zum endgültigen Polymerwerkstoff vernetzt wird.

Polymere mit Polyisocyanuratstrukturanteilen sind grundsätzlich für ihre gute Temperatur- und Chemikalienbeständigkeit bekannt. Insbesondere Polyisocyanurate auf Basis aliphatischer Isocyanate weisen hohe Witterungsbeständigkeiten auf. Allerdings ist die vollständige Trimerisierung von Diisocyanaten zu Polyisocyanuratkunststoffen schwer zu kontrollieren. Dies liegt insbesondere daran, dass die Wärmetönung der Trimerisierungsreaktion zu Polyisocyanuratkunststoffen ausgehend von monomeren Diisocyanaten besonders bei monomeren Diisocyanaten mit hohem Isocyanatgehalt (z.B. BDI, PDI, HDI, TIN) sehr hoch (-75 kJ/mol NCO) ist, so dass eine Reaktion nicht praxisgerecht durchgeführt werden kann. Dies gilt insbesondere im Hinblick auf den für industrielle Anwendungen erforderlichen Großmaßstab und adiabatische Bedingungen, wie sie typischerweise im Inneren von Volumenkörpern bei stark exothermen Polymerisationsverfahren auftreten.

Eine adiabatische Zustandsänderung ist ein thermodynamischer Vorgang bei dem ein System von einem Zustand in einen anderen überführt wird, ohne Wärmeenergie mit seiner Umgebung auszutauschen. Unter "adiabatischen Bedingungen" wird hier verstanden, dass ein vollständiges Abführen der bei der exothermen Reaktion frei werdenden Reaktionswärme an die Umgebung nicht möglich ist. So können in Volumenkörpern typischerweise keine homogenen Bedingungen realisiert werden und es herrschen besonders im Inneren der Volumenkörper bei schnellen Reaktionen "adiabatische" Bedingungen vor, die bei exothermer Reaktion zu einer lokalen starken Temperaturerhöhung führen können. Diese lokalen Hotspots sind extrem kritisch, wenn es um die Herstellung von funktional homogenen Produkten geht. Im Stand der Technik erfolgte die vollständige Trimerisierung zu Polyisocyanuratkunststoffen daher bislang nur in kleinen Substanzmengen unter strikter Temperaturkontrolle.

So beschreibt beispielsweise European Polymer Journal, Vol. 16, 147 - 148 (1980*)* die langsame katalytische Trimerisierung von monomerem 1,6-Diisocyanatohexan (HDI) bei 40 °C zu einem klaren, transparenten Isocyanatgruppen-freien Polyisocyanuratkunststoff. Hierzu werden allerdings 15 Gew.-% an Dibutylzinndimethoxid als Trimerisierungskatalysator benötigt.

European Polymer Journal, Vol. 16, 831 - 833 (1980*)* beschreibt die vollständige Trimerisierung von monomerem HDI zu einem Polyisocyanurat bei einer Temperatur von 140 °C unter Verwendung von 6 Gew.-% Tributylzinnoxid als Katalysator.

In Journal of Polymer Science Part A: Polymer Chemistry 2013, 51, 2631 - 2637 wird die Herstellung optisch transparenter Polyisocyanuratfilme auf Basis von monomeren HDI/MDI-Gemischen mit Natrium-p-Toluolsulfinat als Katalysator beschrieben. Unter Verwendung von ausschließlich monomerem HDI als Ausgangsdiisocyanat lassen sich mit diesem Katalysator allerdings keine klaren Filme erhalten, da das Reaktionsgemisch aufgrund der extremen Exothermie der Trimerisierungsreaktion stark aufschäumt. Die Synthese eines reinen HDI-Polyisocyanurates gelang nach dieser Veröffentlichung lediglich im Reagenzglas im mmol-Maßstab in organischer Lösung nach aufwendiger Aufarbeitung.

Die Dissertationsschrift von Theo Flipsen: "Design, synthesis and properties of new materials based on densely crosslinked polymers for polymer optical fiber and amplifier applications", Rijksuniversiteit Groningen, 2000 beschreibt die langsame thermisch kontrollierte Trimerisierung von monomerem HDI mit einem Neodym/Kronenether-Komplex als Katalysator. Das dabei erhaltene Polyisocyanurat, das gute optische, thermische und mechanische Eigenschaften aufweisen soll, wurde im Rahmen der Dissertation auf seine Eignung für optische Anwendungen, insbesondere als polymerer Lichtleiter untersucht.

Aus dem oben genannten Stand der Technik geht hervor, dass die Temperaturkontrolle bei der Herstellung von hochumgesetzten Polyisocyanuraten von enormer Bedeutung ist, da aufgrund der hohen Isocyanatgehalte der monomeren Ausgangsprodukte bei adiabatischen Bedingungen, wie sie bei Trimerisierungen in Volumenkörpern typischerweise vorherrschen, aufgrund der exotherm verlaufenden Reaktion, Temperaturen von über 300 °C, also oberhalb des Flammpunktes von monomerem HDI bei 140 °C sowie des Siedepunktes von monomerem HDI von 255 °C und sogar bis zur Selbstentzündungstemperatur von HDI von 454 °C, entstehen können. Die hohen Temperaturen können zur direkten Zersetzung der Produkte und sogar zur in situ Verdampfung und Selbstentzündung der monomeren Diisocyanate führen.

Neben den arbeitshygienischen Nachteilen durch die freigesetzten monomeren Diisocyanate oder Zersetzungsprodukte, sind dabei die Bildung von Blasen und das Auftreten von Verfärbungen bei höheren Temperaturen sehr störend. Die Blasenbildung erfolgt beispielsweise aufgrund von Nebenreaktionen durch Uretdionbildung und nachträgliche Carbodiimidisierung unter Abspaltung von Kohlenstoffdioxid. Die ausgehend von den monomeren Diisocyanaten hergestellten Volumenkörper weisen daher typischerweise Blasen auf und können somit bestimmten Vorgaben bezüglich Dichte, elektrischem Isolationsverhalten und mechanischer Eigenschaften nicht genügen. Die Verfärbungen werden ebenfalls durch Nebenreaktionen verursacht, die zu gelben bis braunen Nebenprodukten führen. Üblicherweise weisen Polyisocyanuratkunststoffe, die ausgehend von monomeren Diisocyanaten bei höheren Temperaturen hergestellt wurden, daher meist Verfärbungen auf.

Aus diesem Grund finden Polyisocyanurate bisher üblicherweise nur als niedrigviskose monomere oder oligomere Vernetzungsmittel in der Lackchemie praktische Anwendung, bei deren Herstellung die Trimerisierungsreaktion bereits bei niedrigen Umsätzen durch Deaktivierung des Katalysators gestoppt wird und überschüssiges nicht abreagiertes monomeres Diisocyanat entfernt wird. So sehen die DE 3100 263; GB 952 931, GB 966 338; US 3 211 703, US 3 330 828, EP 0 056 159 B1 und DE 32 19 608 A1 bei der Herstellung von Vernetzungsmitteln auf Basis von monomeren oder oligomeren Polyisocyanuraten, ausgehend von aliphatischen und gemischt aliphatischen und aromatischen monomeren Diisocyanaten, entweder eine Durchführung der Reaktion in Verdünnung oder nur bis zu niedrigen Umsatzwerten bei sehr genauer Temperaturkontrolle vor. Dabei entstehen gezielt keine vollständig vernetzten Polyisocyanuratkunststoffe sondern nur oligomere, niedrigviskose, lösliche Präpolymere.

Eine bessere Temperaturkontrolle bei der Trimerisierung von Isocyanaten kann durch die Verwendung oligomerer Polyisocyanate erreicht werden wie z.B. in WO 2016/170057, WO 2016/170059 oder WO 2016/170061 beschrieben.

Bei Formkörpern mit einem ungünstigen Verhältnis von Oberfläche zu Volumen besteht aber auch hier das Problem der Wärmeabfuhr. Deswegen sind Herstellungsverfahren für Polyisocyanuratkunststoffe, bei denen die Entstehung von Reaktionswärme noch besser kontrolliert werden kann, wünschenswert.

Außerdem führen die in WO 2016/170057, WO 2016/170059 und WO 2016/170061 beschriebenen Herstellungsverfahren in einem einzigen Verfahrensschritt zu vollständig ausgehärteten Polyisocyanuratkunststoffen. Es ist aber wünschenswert, Verfahren bereitzustellen, bei denen zunächst ein lagerfähiges und transportfähiges Vorprodukt erhalten wird, das aber noch verformbar ist. Dieses Vorprodukt kann zentral hergestellt werden und dann an anderer Stelle zum gewünschten Endprodukt weiterverarbeitet werden.

Der Erfindung lag somit die Aufgabe zugrunde, Herstellungsverfahren für Polyisocyanuratkunststoffe bereitzustellen, die den oben dargelegten Anforderungen genügen.

Diese Aufgabe wird durch die in den Patentansprüchen und der Beschreibung beschriebenen Ausführungsformen der Erfindung gelöst.

Die vorliegende Erfindung betrifft ein Verfahren zur Herstellung eines Polyisocyanuratkunststoffs D enthaltend die Schritte
a) Bereitstellen eines Polyisocyanatpolymers C,
   (i) enthaltend Uretdiongruppen;
   (ii) enthaltend einen Katalysator B2, der die Reaktion von Uretdiongruppen zu Isocyanuratgruppen katalysiert; und
   (iii) gekennzeichnet durch ein Modul G' bestimmt durch ein Platte/Platte-Rheometer gemäß ISO 6721-10:2015-09 bei 1/s bei 23°C von wenigstens 1^{∗}10⁶ Pa;
b) katalytische Trimerisierung des Polyisocyanatpolymers C zu einem Polyisocyanuratkunststoff D bei einer Temperatur von wenigstens 100 °C, wobei diese Temperatur wenigstens 20 °C höher ist als die Temperatur, bei der die katalytische Polymerisation zur Herstellung des Polyisocyanatpolymers C durchgeführt wurde.

"Bereitstellung des Polyisocyanats C" bedeutet hier, dass das Polyisocyanatpolymer C in einer Form vorliegt, in der es zur Herstellung des Polyisocyanuratkunststoffs D eingesetzt werden kann. Dies setzt natürlich die Herstellung des Polyisocyanats C voraus, wobei diese durch einen Fremdanbieter erfolgen kann, so dass das Polyisocyanatpolymer C durch Kauf bereitgestellt wird.

Weiterhin betrifft die vorliegende Erfindung ein Verfahren zur Herstellung eines Polyisocyanuratkunststoffs D, enthaltend die Schritte
a) Bereitstellen eines Reaktionsgemisches mit einem molaren Verhältnis von Isocyanatgruppen zu mit Isocyanat reaktiven Gruppen von wenigstens 3 : 1, enthaltend
   (i) eine Polyisocyanatzusammensetzung A,
   (ii) einen Katalysator B1, der die Reaktion von Isocyanatgruppen zu Uretdiongruppen katalysiert, und
   (iii) einen Katalysator B2, der die Reaktion von Isocyanat- und Uretdiongruppen zu Isocyanuratgruppen katalysiert, wobei Katalysator B1 verschieden von Katalysator B2 ist;
b) katalytische Polymerisation der Polyisocyanatzusammensetzung A zu einem Polyisocyanatpolymer C, welches gekennzeichnet ist durch
   (i) die Anwesenheit von Uretdiongruppen; und
   (ii) ein Modul G' bestimmt durch ein Platte/Platte-Rheometer gemäß ISO 6721-10:2015-09 bei 1/s bei 23°C von ≥ 1^{∗}10⁶ Pa;
   wobei die Polymerisation bei einer Durchschnittstemperatur von höchstens 100 °C über einen Zeitraum von 30 min bis zu 14 Tagen geführt wird; und
c) katalytische Trimerisierung des Polyisocyanatpolymers C bei einer Temperatur von wenigstens 100 °C zu einem Polyisocyanuratkunststoff D, wobei diese Temperatur wenigstens 20 °C höher ist als die Temperatur, bei der die katalytische Polymerisation zur Herstellung des Polyisocyanatpolymers C in Verfahrensschritt b) durchgeführt wurde.

Das erfindungsgemäße Verfahren ist zweistufig. In einem ersten Verfahrensschritt wird durch katalytische Polymerisation einer Polyisocyanatzusammensetzung ein Polyisocyanatpolymer C hergestellt, das lagerstabil und transportfähig ist. Dieses Halbzeug wird dann in einem zweiten Schritt der katalytischen Trimerisierung zum fertigen vollständig ausgehärteten Isocyanuratkunststoff D umgesetzt. Zur Verwirklichung dieses Verfahrens muss das Reaktionsgemisch zwei Katalysatoren enthalten: Einen Katalysator B1, der bei relativ niedrigen Temperaturen aktiv ist und die Bildung von Uretdiongruppen katalysiert, zur Durchführung der katalytischen Polymerisation und einen von B1 verschiedenen Katalysator B2, der erst bei höheren Temperaturen aktiv wird und überwiegend die Ausbildung von Isocyanuratgruppen bzw. Umwandlung von Uretdion- in Isocyanuratgruppen katalysiert.

Das zur Herstellung des Polyisocyanatpolymers C durch katalytische Polymerisation eingesetzte Reaktionsgemisch weist ein molares Verhältnis von Isocyanatgruppen zu mit Isocyanat reaktiven Gruppen von wenigstens 3 : 1, bevorzugt wenigstens 5 : 1 und besonders bevorzugt wenigstens 10 : 1 auf. "Mit Isocyanat reaktive Gruppen" im Sinne dieser Anmeldung sind Hydroxyl-, Amino- und Thiolgruppen.

Die vorliegende Erfindung beruht auf der überraschenden Beobachtung, dass die katalytische Umsetzung einer Polyisocyanatzusammensetzung A in Gegenwart von zwei verschiedenen Katalysatoren B1 und B2 so gesteuert werden kann, dass die Vernetzung als ein zweistufiger Prozess abläuft, wobei zwei unterschiedliche Polymere erhalten werden, von denen das erste irreversibel in das zweite umgesetzt werden kann.

Das erfindungsgemäße Verfahren ist besonders effizient. So sind im erfindungsgemäßen Verfahren die Katalysatoren B1 und B2 von Beginn an in der Reaktionsmischung enthalten. Das durch die katalytische Polymerisation entstehende Polyisocyanatpolymer C enthält somit bereits alle Bestandteile, die für die nachfolgende katalytische Trimerisierung erforderlich sind. Deswegen ist es weder notwendig, das entstandene Polyisocyanatpolymer C aufzureinigen, noch muss es vor der katalytischen Trimerisierung mit weiteren Komponenten vermischt werden. Ferner ist das erfindungsgemäße Polyisocyanatpolymer C einfach und sicher industriell handhabbar und kann durch einfaches Erwärmen zum Polyisocyanuratkunststoff D umgesetzt werden. Dies ermöglicht eine einfache Herstellung des Polyisocyanuratkunststoffs D auf Basis eines bereits vernetzten polymeren Vorläufers C.

Die zweistufige erfindungsgemäße Verfahrensführung hat insbesondere den Vorteil, dass als Zwischenprodukt ein Polyisocyanatpolymer C erhalten wird, welches als solches hergestellt, gelagert und vertrieben werden kann. Da das Produkt der katalytischen Polymerisation eine relativ niedrige Glasübergangstemperatur aufweist, in der Regel weniger als 60 °C, kann es vor der Durchführung der katalytischen Trimerisierung umgeformt werden und durch die anschließende katalytische Trimerisierung in der neuen Form fixiert werden. So können Halbzeuge bereitgestellt werden, die auch nach längerer Zeit und an anderen Orten ohne großen Aufwand zum Endprodukt weiter verarbeitet werden können.

Die erfindungsgemäße Verfahrensführung hat den weiteren Vorteil, dass unter Verwendung von atpolmer C die katalytische Trimerisierung sehr schnell durchgeführt und mit nur sehr geringen Materialschrumpf der Polyisocyanuratkunststoff D hergestellt werden kann. Der Materialschrumpf ausgehend von Polyisocyanatpolymer C beträgt erfindungsgemäß ≤ 5% bevorzugt ≤ 3% und ganz besonders bevorzugt ≤ 2%. Der Materialschrumpf wird über die Veränderung der Dichte errechnet. Dies erlaubt eine effiziente Herstellung von Präzisionsbauteilen, z.B. für die Automobil- und Elektronikindustrie.

Die erste Stufe des erfindungsgemäßen Verfahrens kann insbesondere auch kontinuierlich erfolgen, da kontinuierliche Herstellungsverfahren in vielen Fällen wirtschaftliche Vorteile bieten. Völlig flexibel und unabhängig von der Herstellung des Polyisocyanatpolymers C kann dann zu einem anderen Zeitpunkt und / oder an einem anderen Ort die katalytische Trimerisierung erfolgen, d.h. die Aushärtung des Polyisocyanatpolymers C zum gewünschten Polyisocyanuratkunststoff D.

Weiterer Inhalt des Erfindungsgedanken ist, durch die katalytische Polymerisation zunächst ein Zwischenprodukt zu erhalten, welches semistabile Gruppen enthält, die unter den Bedingungen der Lagerung stabil sind und gleichzeitig eine Polymerisation des Reaktionsgemisches bzw. einen starken Viskositätsanstieg bewirken, aber bei den entsprechenden Prozesstemperaturen aufbrechen und zu stabilen chemischen Bindungen des fertigen Bauteils führen.

Das Verfahrensprodukt der katalytischen Polymerisation kann als Beschichtung vorliegen, es kann als Formkörper ohne Füllstoffe vorliegen oder es kann mit geeigneten Füllstoffen von beliebiger Geometrie vermischt sein. Der Polyisocyanuratkunststoff D ist durch gutes Brandverhalten und eine hohe Beständigkeit gegen Witterungseinflüsse und Chemikalien gekennzeichnet.

Die einzelnen Verfahrensschritte und die zur Herstellung des Polyisocyanatpolymers C eingesetzten Komponenten werden nachfolgend näher beschrieben.

Wenn im Folgenden Reaktionstemperaturen benannt werden, dann ist damit die Temperatur gemeint, auf die sich das Reaktionsgemisch im Laufe der Reaktion erwärmt oder auf die es durch externe Wärmequellen erwärmt wird. Wenn nicht anders definiert, dann sind Temperaturen keine Spitzentemperaturen sondern Durchschnittstemperaturen, die sich als Mittelwert über einen definierten Zeitraum der Reaktion während der katalytischen Polymerisation und der katalytischen Trimerisierung einstellen. Der minimale Zeitabschnitt zur Bestimmung einer durchschnittlichen Temperatur beträgt dabei mindestens 10 Minuten, bevorzugt mindestens 20 Minuten und ganz besonders bevorzugt mindestens 30 Minuten. Während des betreffenden Verfahrensschritts erreichte Spitzentemperaturen dürfen den Mittelwert um nicht mehr als 100 %, vorzugsweise um nicht mehr als 50 % übersteigen (bezogen auf die Temperaturskala nach Celsius).

### Polyisocyanatzusammensetzung A

Unter "Polyisocyanatzusammensetzung A" wird im Sinne der Erfindung die Isocyanatkomponente im anfänglichen Reaktionsgemisch bezeichnet. Anders ausgedrückt handelt es sich dabei um die Summe aller Verbindungen im anfänglichen Reaktionsgemisch, die Isocyanat-Gruppen aufweisen. Die Polyisocyanatzusammensetzung A wird also als Edukt im erfindungsgemäßen Verfahren eingesetzt. Wenn hier von "Polyisocyanatzusammensetzung A" insbesondere von "Bereitstellen der Polyisocyanatzusammensetzung A" die Rede ist, dann bedeutet dies, dass die Polyisocyanatzusammensetzung A als Edukt existiert und eingesetzt wird.

Der Begriff "Polyisocyanat", wie hier verwendet, ist eine Sammelbezeichnung für Verbindungen, die im Molekül zwei oder mehrere Isocyanat-Gruppen (hierunter versteht der Fachmann freie Isocyanat-Gruppen der allgemeinen Struktur -N=C=O) enthalten. Einfachste und wichtigste Vertreter dieser Polyisocyanate sind die Diisocyanate. Diese haben die allgemeinen Struktur O=C=N-R-N=C=O, wobei R üblicherweise für aliphatische, alicyclische und/oder aromatische Reste steht.

Aus Polyisocyanaten lassen sich wegen der Mehrfachfunktionalität (≥ 2 Isocyanat-Gruppen) eine Vielzahl von Polymeren (z.B. Polyurethane, Polyharnstoffe und Polyisocyanurate) und oligomeren Verbindungen (z.B. solche mit Urethan-, Harnstoff-, Uretdion-, Isocyanurat-, Allophanat-, Biuret-, Iminooxadiazindion- und/oder Oxadiazintrionstruktur) herstellen.

Wenn hier allgemein von "Polyisocyanaten" die Rede ist, so sind damit monomere und/oder oligomere Polyisocyanate gleichermaßen gemeint. Zum Verständnis vieler Aspekte der Erfindung ist es jedoch wichtig, zwischen monomeren Diisocyanaten und oligomeren Polyisocyanaten zu unterscheiden. Wenn hier von "oligomeren Polyisocyanaten" die Rede ist, dann sind damit Polyisocyanate gemeint, die aus mindestens zwei monomeren Diisocyanatmolekülen aufgebaut sind, d.h. es sind Verbindungen, die ein Reaktionsprodukt aus mindestens zwei monomeren Diisocyanatmolekülen enthalten oder daraus bestehen.

Die Herstellung oligomerer Polyisocyanate aus monomeren Diisocyanaten wird hier auch als Modifizierung monomerer Diisocyanate bezeichnet. Diese "Modifizierung", wie hier verwendet, bedeutet dabei die Reaktion monomerer Diisocyanate zu oligomeren Polyisocyanaten mit Urethan-, Urea-, Uretdion-, Isocyanurat-, Allophanat-, Biuret-, Iminooxadiazindion- und/oder Oxadiazintrionstruktur.

So ist z.B. Hexamethylendiisocyanat (HDI) ein "monomeres Diisocyanat", da es zwei Isocyanat-Gruppen enthält und kein Reaktionsprodukt aus mindestens zwei Polyisocyanatmolekülen ist:

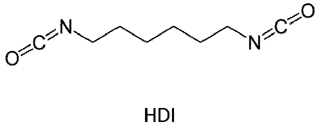

Reaktionsprodukte aus mindestens zwei HDI-Molekülen, die immer noch über mindestens zwei Isocyanat-Gruppen verfügen, sind demgegenüber "oligomere Polyisocyanate" im Sinne der Erfindung. Vertreter solcher "oligomerer Polyisocyanate" sind ausgehend von dem monomeren HDI z.B. das HDI-Isocyanurat und das HDI-Biuret, die jeweils aus drei monomeren HDI Bausteinen aufgebaut sind:

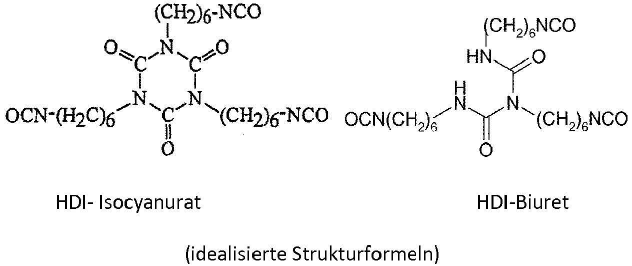

Gemäß einer Ausführungsform der Erfindung enthält die Polyisocyanatzusammensetzung A monomere und/oder oligomere Polyisocyanate. Gemäß einer weiteren Ausführungsform der Erfindung besteht die Polyisocyanatzusammensetzung A vollständig oder zu mindestens 25, 40, 60, 80, 85, 90, 95, 98, 99 oder 99,5 Gew.-%, jeweils bezogen auf das Gewicht der Polyisocyanatzusammensetzung A, aus monomeren Polyisocyanaten. Mischungen aus monomeren und oligomeren Polyisocyanaten können besonders vorteilhaft eingesetzt werden, um die Viskosität der Polyisocyanatzusammensetzung A einzustellen. Die monomeren Polyisocyanate können hier als Reaktivverdünner eingesetzt werden, um die Viskosität der oligomeren Polyisocyanate herabzusetzen.

Gemäß einer alternativen Ausführungsform der Erfindung enthält die bei der Vernetzung als Edukt eingesetzte Polyisocyanatzusammensetzung A vorwiegend oligomere Polyisocyanate und ist arm an monomeren Polyisocyanaten. Gemäß einer Ausführungsform der Erfindung besteht die Polyisocyanatzusammensetzung A vollständig oder zu mindestens 25, 40, 60, 80, 85, 90, 95, 98, 99 oder 99,5 Gew.-%, jeweils bezogen auf das Gewicht der Polyisocyanatzusammensetzung A, aus oligomeren Polyisocyanaten. Dieser Gehalt an oligomeren Polyisocyanaten bezieht sich auf die Polyisocyanatzusammensetzung A, d.h. diese werden nicht etwa während des erfindungsgemäßen Verfahrens als Zwischenprodukt gebildet, sondern liegen bereits zu Beginn der Reaktion in der als Edukt eingesetzten Polyisocyanatzusammensetzung A vor.

"Monomerarm" und "arm an monomeren Polyisocyanaten" wird hier in Bezug auf die Polyisocyanatzusammensetzung A synonym verwendet.

Da monomere Polyisocyanate flüchtig sind, kann es aus Gründen der Arbeitssicherheit vorteilhaft sein, wenn die Polyisocyanatzusammensetzung A einen Anteil an monomeren Polyisocyanaten in der Polyisocyanatzusammensetzung A von höchstens 20 Gew.-%, insbesondere höchstens 15 Gew.-% oder höchstens 10 Gew.-%, jeweils bezogen auf das Gewicht der Polyisocyanatzusammensetzung A, aufweist. Vorzugsweise weist die Polyisocyanatzusammensetzung A einen Gehalt an monomeren Polyisocyanaten von höchstens 5 Gew.-%, vorzugsweise höchstens 2,0 Gew.-%, besonders bevorzugt höchstens 1,0 Gew.-%, jeweils bezogen auf das Gewicht der Polyisocyanatzusammensetzung A, auf. Besonders gute Ergebnisse stellen sich ein, wenn die Polymerzusammensetzung A im Wesentlichen frei von monomeren Polyisocyanaten ist. "Im Wesentlichen frei" bedeutet dabei, dass der Gehalt an monomeren Polyisocyanaten höchstens 0,3 Gew.-%, bevorzugt höchstens 0,1 Gew.-% bezogen auf das Gewicht der Polyisocyanatzusammensetzung A, beträgt.

Monomerarme Polyisocyanatzusammensetzungen A können erhalten werden, indem die Modifizierung eines monomeren Ausgangsisocyanats von einem einem weiteren Verfahrensschritt zur Abtrennung der nicht umgesetzten überschüssigen monomeren Polyisocyanate gefolgt wird. Diese Monomerenabtrennung kann besonders praxisgerecht nach an sich bekannten Verfahren vorzugsweise durch Dünnschichtdestillation im Hochvakuum oder durch Extraktion mit geeigneten gegenüber Isocyanatgruppen inerten Lösungsmitteln, beispielsweise aliphatischen oder cycloaliphatischen Kohlenwasserstoffen wie Pentan, Hexan, Heptan, Cyclopentan oder Cyclohexan, erfolgen.

Gemäß einer Ausführungsform der Erfindung wird die erfindungsgemäße Polyisocyanatzusammensetzung A durch Modifizierung monomerer Polyisocyanate mit anschließender Abtrennung nicht umgesetzter Monomere erhalten.

Gemäß einer weiteren besonderen Ausführungsform der Erfindung kann die Polyisocyanatzusammensetzung A ein Gemisch verschiedener Isocyanate enthalten. Eine Abmischung von Isocyanaten kann zur Erzielung spezieller technischer Effekte, wie z.B. einer besonderen Härte oder Glasübergangstemperatur (Tg) vorteilhaft sein. Besonders praxisgerechte Ergebnisse stellen sich ein, wenn die Polyisocyanatzusammensetzung A einen Anteil von monomeren Diisocyanaten in der Polyisocyanatzusammensetzung A von höchstens 45 Gew.-%, insbesondere höchstens 15 Gew.-% oder höchstens 10 Gew.-%, jeweils bezogen auf das Gewicht der Polyisocyanatzusammensetzung A, aufweist. Vorzugsweise weist die Polyisocyanatzusammensetzung A einen Gehalt an monomeren Diisocyanat von höchstens 5 Gew.-%, vorzugsweise höchstens 2,0 Gew.-%, besonders bevorzugt höchstens 1,0 Gew.-%, jeweils bezogen auf das Gewicht der Polyisocyanatzusammensetzung A, auf.

In einer weiteren Ausführungsform des erfindungsgemäßen Verfahrens weist die Polyisocyanatzusammensetzung A einen Anteil an reaktiven Isocyanatgruppen des monomeren Diisocyanats bezogen auf die Gesamtzahl aller reaktiven Isocyanatgruppen in der Polyisocyanatzusammensetzung A von höchstens 45 %, insbesondere höchstens 25 % oder höchstens 10% auf. Vorzugsweise weist die Polyisocyanatzusammensetzung A einen Gehalt an monomeren Diisocyanatgruppen von höchstens 5 %, vorzugsweise höchstens 2,0 %, besonders bevorzugt höchstens 1,0 %, jeweils bezogen auf die Gesamtzahl aller reaktiven Isocyanatgruppen der Polyisocyanatzusammensetzung A, auf.

Gemäß einer weiteren besonderen Ausführungsform des erfindungsgemäßen Verfahrens, kann die Polyisocyanatzusammensetzung A monomere Monoisocyanate oder monomere Polyisocyanate mit einer Isocyanatfunktionalität größer zwei oder kleiner zwei, d.h. mit mehr als zwei oder weniger als zwei Isocyanatgruppen pro Molekül, enthalten. Die Zugabe von monomeren Monoisocyanaten hat sich als vorteilhaft erwiesen, um die Netzwerkdichte des Polyisocyanuratkunststoffs D zu beeinflussen. Besonders praxisgerechte Ergebnisse stellen sich ein, wenn die Polyisocyanatzusammensetzung A einen Anteil an monomeren Monoisocyanaten oder monomeren Isocyanaten mit einer Isocyanatfunktionalität kleiner zwei in der Polyisocyanatzusammensetzung A von weniger 50 Gew.-%, insbesondere weniger 15 Gew.-% oder weniger 10 Gew.-%, jeweils bezogen auf das Gewicht der Polyisocyanatzusammensetzung A, aufweist. Vorzugsweise weist die Polyisocyanatzusammensetzung A einen Gehalt an monomeren Monoisocyanaten oder monomeren Isocyanaten mit einer Isocyanatfunktionalität kleiner zwei von höchstens 5 Gew.-%, vorzugsweise höchstens 2,0 Gew.-%, besonders bevorzugt höchstens 1,0 Gew.-%, jeweils bezogen auf das Gewicht der Polyisocyanatzusammensetzung A, auf.

Die hier beschriebenen oligomeren Polyisocyanate werden üblicherweise durch Modifizierung einfacher aliphatischer, cycloaliphatischer, araliphatischer und/oder aromatischer monomerer Diisocyanate oder Mischungen solcher monomeren Diisocyanate erhalten.

Die oligomeren Polyisocyanate können erfindungsgemäß insbesondere Urethan-, Urea-, Uretdion-, Isocyanurat-, Allophanat-, Biuret-, Iminooxadiazindion- und/oder Oxadiazintrionstruktur aufweisen. Gemäß einer Ausführungsform der Erfindung weisen die oligomeren Polyisocyanate mindestens eine der folgenden oligomeren Strukturtypen oder deren Gemische auf:

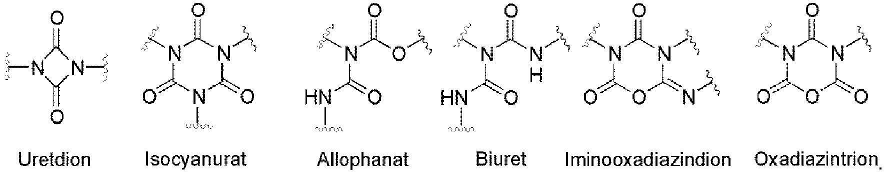

Überraschend hat sich herausgestellt, dass es vorteilhaft sein kann, oligomere Polyisocyanate einzusetzen, die eine Mischung aus mindestens zwei oligomeren Polyisocyanaten darstellen, wobei sich die mindestens zwei oligomere Polyisocyanate in ihrer Struktur unterscheiden. Diese ist vorzugsweise ausgewählt aus der Gruppe bestehend aus Urethan-, Urea-, Uretdion-, Isocyanurat-, Allophanat-, Biuret-, Iminooxadiazindion- und Oxadiazintrionstrukturen und deren Mischungen. Derartige Ausgangsmischungen können insbesondere im Vergleich zu Trimerisierungsreaktionen mit oligomeren Polyisocyanaten nur einer definierten Struktur zu einer Beeinflussung des Tg-Wertes, mechanischer Werte wie der Härte, Kratzfestigkeit, oder Glanz und Haptik führen, was für viele Anwendungen vorteilhaft ist.

Bevorzugt wird im erfindungsgemäßen Verfahren eine Polyisocyanatzusammensetzung A, die aus mindestens einem oligomeren Polyisocyanat mit Urethan-, Urea-, Biuret-, Allophanat-, Isocyanurat-, und/oder Iminooxadiazindionstruktur und Mischungen davon besteht, eingesetzt.

Gemäß einer anderen Ausführungsform handelt es sich bei der Polyisocyanatzusammensetzung A, welche oligomere Polyisocyanate enthält, um eine solche, die nur eine einzelne definierte oligomere Struktur, beispielsweise ausschließlich oder größtenteils eine Isocyanuratstruktur, enthält. Im Rahmen der vorliegenden Erfindung wird eine Polyisocyanatzusammensetzung A als Polyisocyanatzusammensetzung einer einzelnen definierten oligomeren Struktur angesehen, wenn eine oligomere Struktur ausgewählt aus Urethan-, Urea-, Uretdion-, Isocyanurat-, Allophanat-, Biuret-, Iminooxadiazindion- und/oder Oxadiazintrionstrukturen zu mindestens 50 mol-%, vorzugsweise 60 mol-%, bevorzugt 70 mol-%, besonders bevorzugt 80 mol-%, insbesondere 90 mol-%, jeweils bezogen auf die Summe der vorliegenden oligomeren Strukturen aus der Gruppe, bestehend aus Urethan-, Urea-, Uretdion-, Isocyanurat-, Allophanat-, Biuret-, Iminooxadiazindion-und Oxadiazintrionstrukturen in der Polyisocyanatzusammensetzung A, vorliegt.

Gemäß einer weiteren Ausführungsform handelt es sich bei den oligomeren Polyisocyanaten um solche, die hauptsächlich Isocyanuratstrukturen aufweisen, und die oben genannten Urethan-, Urea-, Uretdion-, Allophanat-, Biuret-, Iminooxadiazindion- und/oder Oxadiazintrionstruktur lediglich als Nebenprodukte enthalten dürfen. So sieht eine Ausführungsform der Erfindung den Einsatz einer Polymerzusammensetzung A einer einzelnen definierten oligomeren Struktur vor, wobei die oligomere Struktur eine Isocyanuratstruktur ist und zu mindestens 50 mol-%, vorzugsweise 60 mol-%, bevorzugt 70 mol-%, besonders bevorzugt 80 mol-%, insbesondere 90 mol-%, jeweils bezogen auf die Summe der vorliegenden oligomeren Strukturen aus der Gruppe, bestehend aus Urethan-, Urea-, Uretdion-, Isocyanurat-, Allophanat-, Biuret-, Iminooxadiazindion- und Oxadiazintrionstrukturen in der Polyisocyanatzusammensetzung A, vorliegt.

Es ist erfindungsgemäß ebenfalls möglich oligomere Polyisocyanate einzusetzen, die weitestgehend keine Isocyanuratstruktur aufweisen, und hauptsächlich mindestens einen der oben genannten Urethan-, Urea-, Uretdion-, Allophanat-, Biuret-, Iminooxadiazindion- und/oder Oxadiazintrion-Strukturtypen enthalten. Gemäß einer besonderen Ausführungsform der Erfindung besteht die Polyisocyanatzusammensetzung A zu 50 mol-%, vorzugsweise 60 mol-%, bevorzugt 70 mol-%, besonders bevorzugt 80 mol-%, insbesondere 90 mol-%, jeweils bezogen auf die Summe der vorliegenden oligomeren Strukturen aus der Gruppe, bestehend aus Urethan-, Urea-, Uretdion-, Isocyanurat-, Allophanat-, Biuret, Iminooxadiazindion- und Oxadiazintrionstrukturen in der Polyisocyanatzusammensetzung A, aus oligomeren Polyisocyanaten, die einen Strukturtyp ausgewählt aus der Gruppe bestehend aus Urethan-, Urea-, Uretdion-, Allophanat-, Biuret-, Iminooxadiazindion- und/oder Oxadiazintrionstrukturen aufweisen.

Eine weitere Ausführungsform der Erfindung sieht den Einsatz einer isocyanuratarmen Polyisocyanatzusammensetzung A vor, welche, bezogen auf die Summe der vorliegenden oligomeren Strukturen aus der Gruppe, bestehend aus Urethan-, Urea-, Uretdion-, Isocyanurat-, Allophanat-, Biuret, Iminooxadiazindion- und Oxadiazintrionstrukturen in der Polyisocyanatzusammensetzung A, weniger als 50 mol-%, vorzugsweise weniger als 40 mol-%, bevorzugt weniger als 30 mol-%, besonders bevorzugt weniger als 20 mol-%, 10 mol-% oder 5 mol-% Isocyanuratstrukturen aufweist.

Eine weitere Ausführungsform der Erfindung sieht den Einsatz einer Polymerzusammensetzung A eines einzelnen definierten oligomeren Strukturtyps vor, wobei der oligomere Strukturtyp ausgewählt ist aus der Gruppe bestehend aus Urethan-, Urea-, Uretdion-, Allophanat-, Biuret-, Iminooxadiazindion- und/oder Oxadiazintrionstrukturen und dieser Strukturtyp zu mindestens 50 mol-%, vorzugsweise 60 mol-%, bevorzugt 70 mol-%, besonders bevorzugt 80 mol-%, insbesondere 90 mol-% , bezogen auf die Summe der vorliegenden oligomeren Strukturen aus der Gruppe, bestehend aus Urethan-, Urea-, Uretdion-, Isocyanurat-, Allophanat-, Biuret, Iminooxadiazindion- und Oxadiazintrionstrukturen in der Polyisocyanatzusammensetzung A, vorliegt.

Die Anteile an Urethan-, Urea-, Uretdion-, Isocyanurat-, Allophanat-, Biuret-, Iminooxadiazindion- und/oder Oxadiazintrionstruktur in der Polyisocyanatzusammensetzung A können z.B. durch NMR-Spektroskopie bestimmt werden. Bevorzugt lässt sich hierbei die ¹³C-NMR-Spektroskopie, vorzugsweise protonenentkoppelt, einsetzen, da die genannten oligomeren Strukturen charakteristische Signale liefern.

Unabhängig vom zugrunde liegenden oligomeren Strukturtyp (Urethan-, Urea-, Uretdion-, Isocyanurat-, Allophanat-, Biuret-, Iminooxadiazindion- und/oder Oxadiazintrionstruktur) weist die beim erfindungsgemäßen Verfahren einzusetzende Polyisocyanatzusammensetzung A vorzugsweise eine (mittlere) NCO-Funktionalität von 1,3 bis 10,0, bevorzugt von 2,0 bis 5,0, vorzugsweise von 2,3 bis 4,5 auf.

Besonders praxisgerechte Ergebnisse stellen sich ein, wenn die erfindungsgemäß einzusetzende Polyisocyanatzusammensetzung A einen Gehalt an Isocyanatgruppen von 1,0 bis 60,0 Gew.-% aufweist. Als besonders praxisgerecht hat es sich erwiesen, wenn die erfindungsgemäße Polyisocyanatzusammensetzung A einen Gehalt an Isocyanatgruppen von 8,0 bis 50,0 Gew.-%, bevorzugt von 14,0 bis 30,0 Gew.-%, jeweils bezogen auf das Gewicht der Polyisocyanatzusammensetzung A, aufweist.

Herstellverfahren für oligomere Polyisocyanate mit Urethan-, Harnstoff-, Uretdion-, Isocyanurat-, Allophanat-, Biuret-, Iminooxadiazindion- und/oder Oxadiazintrionstruktur sind beispielsweise in J. PraktChem. 336 (1994) 185 - 200, in DE-A 1 670 666, DE-A 1 954 093, DE-A 2 414 413, DE-A 2 452 532, DE-A 2 641 380, DE-A 3 700 209, DE-A 3 900 053 und DE-A 3 928 503 oder in EP-A 0 336 205, EP-A 0 339 396 und EP-A 0 798 299 beschrieben.

Gemäß einer zusätzlichen oder alternativen Ausführungsform der Erfindung ist die Polyisocyanatzusammensetzung A dadurch definiert, dass sie oligomere Polyisocyanate enthält, die aus monomeren Polyisocyanaten unabhängig von der Art der verwendeten Modifizierungsreaktion unter Einhaltung eines Oligomerisierungsgrades von 5 bis 45 %, vorzugsweise 10 bis 40 %, besonders bevorzugt 15 bis 30 %, erhalten wurden. Unter "Oligomerisierungsgrad" ist dabei der Prozentsatz der in der Ausgangsmischung ursprünglich vorhandenen Isocyanatgruppen zu verstehen, der während des Herstellprozesses unter Bildung von Urethan-, Urea-, Uretdion-, Isocyanurat-, Allophanat-, Biuret-, Iminooxadiazindion- und/oder Oxadiazintrionstrukturen verbraucht wird.

Geeignete monomere Polyisocyanate für die Polyisocyanatzusammensetzung A oder Ausgangsverbindungen für die oligomeren Polyisocyanate sind beliebige, auf verschiedene Weise, beispielsweise durch Phosgenierung in der Flüssig- oder Gasphase oder auf phosgenfreien Weg, wie z.B. durch thermische Urethanspaltung, zugängliche monomere Polyisocyanate. Besonders gute Ergebnisse stellen sich ein, wenn es sich bei den monomeren Polyisocyanaten um monomere Diisocyanate handelt. Bevorzugte monomere Diisocyanate sind solche, die ein Molekulargewicht im Bereich von 140 bis 400 g/mol aufweisen, mit aliphatisch, cycloaliphatisch, araliphatisch und/oder aromatisch gebundenen Isocyanatgruppen, wie z. B. 1,4-Diisocyanatobutan (BDI), 1,5-Diisocyanatopentan (PDI), 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,10-Diisocyanatodecan, 1,3- und 1,4-Diisocyanatocyclohexan, 1,4-Diisocyanato-3,3,5-trimethylcyclohexan, 1,3-Diisocyanato-2-methylcyclohexan, 1,3-Diisocyanato-4-methylcyclohexan, 1-Isocyanato-3,3,5-trimethyl-5-isocyanatomethyl-cyclohexan (Isophorondiisocyanat; IPDI), 1-Isocyanato-1-methyl-4(3)-isocyanatomethylcyclohexan, 2,4'- und 4,4'-Diisocyanatodicyclohexylmethan (H12MDI), 1,3- und 1,4-Bis(isocyanatomethyl)cyclohexan, Bis-(isocyanatomethyl)-norbornan (NBDI), 4,4'-Diisocyanato-3,3'-dimethyldicyclohexylmethan, 4,4'-Diisocyanato-3,3',5,5'-tetramethyldicyclohexylmethan, 4,4'-Diisocyanato-1,1'-bi(cyclohexyl), 4,4'-Diisocyanato-3,3'-dimethyl-1,1'-bi(cyclohexyl), 4,4'-Diisocyanato-2,2',5,5'-tetra-methyl-1,1'-bi(cyclohexyl), 1,8-Diisocyanato-p-menthan, 1,3-Diisocyanato-adamantan, 1,3-Dimethyl-5,7-diisocyanatoadamantan, 1,3- und 1,4-Bis-(isocyanatomethyl)benzol (Xyxlylendiisocyanat; XDI), 1,3- und 1,4-Bis(1-isocyanato-1-methylethyl)-benzol (TMXDI) und Bis(4-(1-isocyanato-1-methylethyl)phenyl)-carbonat, 2,4- und 2,6-Diisocyanatotoluol (TDI), 2,4'- und 4,4'-Diisocyanatodiphenylmethan (MDI), mehrkernige, isomere Diisocyanatophenylmethane, 1,5-Diisocyanatonaphthalin sowie beliebige Gemische solcher Diisocyanate. Weitere ebenfalls geeignete Diisocyanate finden sich darüber hinaus beispielsweise in Justus Liebigs Annalen der Chemie Band 562 (1949) S. 75-136*.*

Ferner können in dem erfindungsgemäßen Verfahren auch klassische aliphatische oder aromatische Isocyanat-Endgruppentragende Präpolymere, wie beispielsweise aliphatische oder aromatische Isocyanat- Endgruppentragende Polyether-, Polyester-, Polycarbonat-Präpolymere als Polyisocyanate in der Polyisocyanatzusammensetzung A eingesetzt werden.

Geeignete monomere Monoisocyanate, die in der Polyisocyanatzusammensetzung A gegebenenfalls eingesetzt werden können, sind beispielsweise n-Butylisocyanat, n-Amylisocyanat, n-Hexylisocyanat, n-Heptylisocyanat, n-Octylisocyanat, Undecylisocyanat, Dodecylisocyanat, Tetradecylisocyanat, Cetylisocyanat, Stearylisocyanat, Cyclopentylisocyanat, Cyclohexylisocyanat, 3- bzw. 4-Methylcyclohexylisocyanat, Phenylisocyanat, Alkylphenylisocyanat, Naphthylisocyanat oder beliebige Gemische solcher Monoisocyanate. Als monomeres Isocyanat mit einer Isocyanatfunktionalität größer zwei, das der Polyisocyanatzusammensetzung A gegebenenfalls zugesetzt werden kann, seien beispielhaft 4-Isocyanatomethyl-1,8-octandiisocyanat (Triisocyanatononan; TIN) oder mehrkernige Derivate des Diphenlymethandiisocyanats (MDI), sogenanntes polymeres MDI (pMDI) oder Roh MDI, genannt.

Gemäß einer Ausführungsform der Erfindung enthält die Polyisocyanatzusammensetzung A aromatische Polyisocyanate. Bevorzugt ist ein Gehalt an aromatischen Polyisocyanaten in der Polyisocyanatzusammensetzung A von höchstens 70 Gew.-%, insbesondere höchstens 30 Gew.-%, höchstens 20 Gew.-%, höchstens 10 Gew.-%, höchstens 5 Gew.-% oder höchstens 1 Gew.-%, jeweils bezogen auf das Gewicht der Polyisocyanatzusammensetzung A, an aromatischen Polyisocyanaten. Wie hier verwendet, bedeutet "aromatisches Polyisocyanat" ein Polyisocyanat, welches mindestens eine aromatisch gebundene Isocyanatgruppe aufweist.

Unter aromatisch gebundenen Isocyanat-Gruppen werden Isocyanat-Gruppen verstanden, die an einen aromatischen Kohlenwasserstoffrest gebunden sind.

Gemäß einer bevorzugten Ausführungsform des erfindungsgemäßen Verfahrens wird eine Polyisocyanatzusammensetzung A eingesetzt, die zu wenigstens 80 mol-%, stärker bevorzugt wenigstens 95 mol-%, aliphatisch und/oder cycloaliphatisch gebundene Isocyanat-Gruppen aufweist, bezogen auf die Gesamtmenge der in der Polyisocyanatzusammensetzung A vorliegenden Isocyanatgruppen. Stärker bevorzugt weist die Polyisocyanatzusammensetzung A in dieser Ausführungsform ausschließlich aliphatisch und/oder cycloaliphatisch gebundene Isocyanat-Gruppen auf.

Unter aliphatisch bzw. cycloaliphatisch gebundenen Isocyanat-Gruppen werden Isocyanat-Gruppen verstanden, die an einen aliphatischen bzw. cycloaliphatischen Kohlenwasserstoffrest gebunden sind.

Gemäß einer anderen bevorzugten Ausführungsform des erfindungsgemäßen Verfahrens wird eine Polyisocyanatzusammensetzung A eingesetzt, die aus einem oder mehreren oligomeren Polyisocyanaten besteht oder diese enthält, wobei die ein oder mehreren oligomeren Polyisocyanate ausschließlich aliphatisch und/oder cycloaliphatisch gebundene Isocyanat-Gruppen aufweisen.

Gemäß einer anderen bevorzugten Ausführungsform des erfindungsgemäßen Verfahrens wird eine Polyisocyanatzusammensetzung A eingesetzt, die aus einem oder mehreren monomeren Polyisocyanaten besteht oder diese enthält, wobei die ein oder mehreren monomeren Polyisocyanate ausschließlich aliphatisch und/oder cycloaliphatisch gebundene Isocyanat-Gruppen aufweisen.

Gemäß einer weiteren Ausführungsform der Erfindung besteht die Polyisocyanatzusammensetzung A zu mindestens 70, 80, 85, 90, 95, 98 oder 99 Gew.-%, jeweils bezogen auf das Gewicht der Polyisocyanatzusammensetzung A, aus monomeren und/oder oligomeren Polyisocyanaten, die ausschließlich aliphatisch und/oder cycloaliphatisch gebundene Isocyanat-Gruppen aufweisen. Praktische Versuche haben gezeigt, dass sich besonders gute Ergebnisse mit Polyisocyanatzusammensetzungen A) erzielen lassen, bei denen die darin enthaltenen oligomeren Polyisocyanate ausschließlich aliphatisch und/oder cycloaliphatisch gebundene Isocyanat-Gruppen aufweisen.

Gemäß einer besonders bevorzugten Ausführungsform des erfindungsgemäßen Verfahrens wird eine Polyisocyanatzusammensetzung A eingesetzt, die aus einem oder mehreren oligomeren Polyisocyanaten besteht oder diese enthält, wobei die ein oder mehreren oligomeren Polyisocyanate auf Basis von 1,4-Diisocyanatobutan (BDI), 1,5-Diisocyanatopentan (PDI), 1,6-Diisocyanatohexan (HDI), Isophorondiisocyanat (IPDI) oder 4,4'-Diisocyanatodicyclohexylmethan (H12MDI) oder deren Mischungen aufgebaut sind.

Gemäß einer alternativen Ausführungsform des erfindungsgemäßen Verfahrens wird eine Polyisocyanatzusammensetzung A eingesetzt, die eines oder mehrere monomere Polyisocyanate, ausgewählt aus 1,4-Diisocyanatobutan (BDI), 1,5-Diisocyanatopentan, (PDI), 1,6-Diisocyanatohexan (HDI), Isophorondiisocyanat (IPDI) oder 4,4'-Diisocyanatodicyclohexylmethan (H12MDI) oder deren Mischungen, enthält.

### Katalysator B1

Geeignete Katalysatoren B1 für das erfindungsgemäße Verfahren sind prinzipiell alle Verbindungen, die bei niedrigen Temperaturen eine Vernetzung von Isocyanatgruppen zu Uretdion-, Isocyanurat-, Allophanat-, Biuret-, Iminooxadiazindion- und/oder Oxadiazintrionstrukturen katalysieren. Dies geschieht vorzugsweise bei höchstens 100 °C, bevorzugt bei höchstens 60 °C, stärker bevorzugt bei höchstens 50 °C und am stärksten bevorzugt bei höchstens 25 °C. Die Temperatur bezieht sich dabei auf die tatsächlich vorhandene Temperatur in der Harzmischung und kann im Einzelfall von der Umgebungstemperatur verschieden sein. Bevorzugt ist als Katalysator B1 eine Verbindung, die unter den vorgenannten Bedingungen die Entstehung von Uretdiongruppen katalysiert. Es entstehen daher in einer bevorzugten Ausführungsform bei der katalytischen Polymerisation zumindest anteilig Uretdiongruppen. Besonders bevorzugt katalysiert der Katalysator B1 vorwiegend die Entstehung von Uretdiongruppen, d.h. Uretdiongruppen haben bezogen auf die Gesamtzahl der unter den insgesamt im Rahmen der katalytischen Polymerisation entstehenden Gruppen wenigstens die relative, besonders bevorzugt die absolute Mehrheit.

Bevorzugt sind Katalysatoren B1, die eine langsame Reaktion der Isocyanatgruppen während der katalytischen Polymerisation schon bei Raumtemperatur ermöglichen. "Langsam" im Sinne der Erfindung ist eine Reaktion, bei der die Wärmeabfuhr der Reaktionswärme an die Umgebung mit einer Geschwindigkeit erfolgt, dass das Bauteil bzw. die Harzmischung eine Temperatur von 100 °C bevorzugt 60°C und besonders bevorzugt 50°C über einen Zeitraum von 30 min, bevorzugt 60 min und ganz besonders bevorzugt 120 min nicht überschreitet. Dem Fachmann ist verständlich, dass die Steuerung des Prozesses abhängig von der Reaktivität der Harzmischung und dem Volumen/ Oberfläche Verhältnis des Bauteils durch Anpassung der Umgebungstemperatur und der Katalysatorkonzentrationen optimiert werden kann. Ziel der Optimierung ist eine Reaktionssteuerung, bei der die katalytische Polymerisation möglichst zügig abläuft, aber eine Harztemperatur 60 °C, bevorzugt 50 °C nicht überschreitet.

Besonders geeignete Katalysatoren B1 für das erfindungsgemäße Verfahren sind Phosphine der allgemeinen Formel (I) oder Mischungen solcher Phosphine 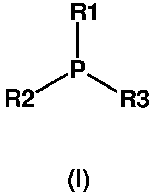 in welcher
- R1, R2 und R3: für gleiche oder verschiedene Reste stehen und jeweils eine Alkyl- oder Cycloalkylgruppe mit bis zu 10 Kohlenstoffatomen, vorzugsweise eine Alkylgruppe mit 2 bis 8 Kohlenstoffatomen oder eine Cycloalkylgruppe mit 3 bis 8 Kohlenstoffatomen, eine Aralkylgruppe mit 7 bis 10, vorzugsweise mit 7 Kohlenstoffatomen oder eine gegebenenfalls mit Alkylresten mit bis zu 10, vorzugsweise 1 bis 6, Kohlenstoffatomen substituierte Arylgruppe mit 6 bis 10, vorzugsweise 6 Kohlenstoffatomen bedeuten, mit der Maßgabe, dass höchstens einer der Reste für eine Arylgruppe und mindestens einer der Reste für eine Alkyl- oder Cycloalkylgruppe steht, oder in welcher
- R1 und R2: aliphatischer Natur sind und, miteinander verknüpft, zusammen mit dem Phosphoratom einen heterocylischen Ring mit 4 bis 6 Ringgliedern bilden, wobei R3 für eine Alkylgruppe mit bis zu 4 Kohlenstoffatomen steht,

Geeignete tertiäre organische Phosphine sind beispielsweise tertiäre Phosphine mit linearaliphatischen Substituenten, wie Trimethylphosphin, Triethylphosphin, Tri-n-propylphosphin, Tripropylphosphin, Dibutylethylphosphin, Tri-n-butylphosphin, Triisobutylphosphin, Tri-tert.-butylphosphin, Pentyl-dimethylphosphin, Pentyl-diethylphosphin, Pentyl-di-propylphosphin, Pentyldibutylphosphin, Pentyldihexylphosphin, Dipentylmethylphosphin, Dipentylethylphosphin, Dipentylpropylphosphin, Dipentylbutylphosphin, Dipentylhexylphosphin, Dipentyloctylphosphin, Tripentylphosphin, Hexyldimethylphosphin, Hexyldiethylphosphin, Hexyldipropylphosphin, Hexyldibutylphosphin, Dihexylmethylphosphin, Dihexylethylphosphin, Dihexylpropylphosphin, Dihexylbutylphosphin, Trihexylphosphin, Trioctylphosphin, Tribenzylphosphin, Benzyldimethylphosphin, Dimethylphenylphosphin oder Butylphosphacyclopentan.

Weitere für das erfindungsgemäße Verfahren geeignete tertiäre organische Phosphine sind beispielsweise auch die aus der EP 1 422 223 A1 bekannten tert.-Phosphine, die mindestens einen, direkt an Phosphor gebundenen cycloaliphatischen Rest aufweisen, wie z. B. Cyclopentyldimethylphosphin, Cyclopentyldiethylphosphin, Cyclopentyl-di-n-propylphosphin, Cyclopentyldiisopropylphosphin, Cyclopentyldibutyl-phosphine mit beliebigen isomeren Butylresten, Cyclopentyldihexylphosphine mit beliebigen isomeren Hexylresten, Cyclopentyldioctylphosphin mit beliebigen isomeren Octylresten, Dicyclopentylmethylphosphin, Dicyclopentylethylphosphin, Dicyclopentyl-n-propylphosphin, Dicyclopentylisopropylphosphin, Dicyclopentylbutylphosphin mit beliebigem isomeren Butylrest, Dicyclopentylhexylphosphin mit beliebigem isomeren Hexylrest, Dicyclopentyloctylphosphin mit beliebigem isomeren Octylrest, Tricyclopentylphosphin, Cyclohexyldimethylphosphin, Cyclohexyldiethylphosphin, Cyclohexyl-di-n-propylphosphin, Cyclohexyl-di-isopropylphosphin, Cyclohexyldibutylphosphine mit beliebigen isomeren Butylresten, Cyclohexyldihexylphosphin mit beliebigen isomeren Hexylresten, Cyclohexyldioctylphosphin mit beliebigen isomeren Octylresten, Dicyclohexylmethylphosphin, Dicyclohexylethylphosphin, Dicyclohexyl-n-propylphosphin, Dicyclohexylisopropylphosphin, Dicyclohexylbutylphosphin mit beliebigem isomeren Butylrest, Dicyclohexylhexylphosphin mit beliebigem isomeren Hexylrest, Dicyclohexyl-octylphosphin mit beliebigem isomeren Octylrest, und Tricyclohexylphosphin.

Weitere geeignete tertiäre organische Phosphine für das erfindungsgemäße Verfahren sind beispielsweise auch die aus der EP 1 982 979 A1 bekannten tert.-Phosphine, die einen oder zwei direkt an Phosphor gebundene, tertiäre Alkylreste aufweisen, wie z. B. tert.-Butyldimethylphosphin, tert.-Butyldiethylphosphin, tert.-Butyldi-n-propylphosphin, tert.-Butyldiisopropylphosphin, tert.-Butyldibutylphosphine mit beliebigen isomeren Butylresten für die nicht-tertiären Butylreste, tert.-Butyldihexylphosphine mit beliebigen isomeren Hexylresten, wobei aber höchstens einer der Hexylreste ein direkt an Phosphor gebundenes tert.-C-Atom aufweist, tert.-Butyldioctylphosphine mit beliebigen isomeren Octylresten, wobei aber höchstens einer der Octylreste ein direkt an Phosphor gebundenes tert.-C-Atom aufweist, Di-tert.-Butylmethylphosphin, Di-tert.-Butylethylphosphin, Di-tert.-Butyl-n-propylphosphin, Di-tert.-Butylisopropylphosphin, Di-tert.-Butylbutylphosphine, in denen für den nicht-tertiären Butylrest n-Butyl, iso-Butyl, 2-Butyl oder Cyclobutyl stehen kann, Di-tert.-Butylhexylphosphine mit einem beliebigen isomeren Hexylrest, der kein direkt an Phosphor gebundenes tert.-C-Atom aufweist, Di-tert.-Butyloctylphosphine mit einem beliebigen isomeren Octylrest, der kein direkt an Phosphor gebundenes tert.-C-Atom aufweist, tert.-Amyldimethylphosphin, tert.-Amyldiethylphosphin, tert.-Amyldi-n-propylphosphin, tert.-Amyldiisopropylphosphin, tert.-Amyldibutylphosphine mit beliebigen isomeren Butylresten, wobei aber höchstens einer der Butylreste für tert.-Butyl steht, tert.-Amyldihexylphosphine mit beliebigen isomeren Hexylresten, wobei aber höchstens einer der Hexylreste ein direkt an Phosphor gebundenes tert.-C-Atome aufweist, tert.-Amyldioctylphosphine mit beliebigen isomeren Octylresten, wobei aber höchstens einer der Octylreste ein direkt an Phosphor gebundenes tert.-C-Atom aufweist, Di-tert.-Amylethylphosphin, Di-tert.-Amylethylphosphin, Di-tert.-Amyl-n-propylphosphin, Di-tert.-Amylisopropylphosphin, Di-tert.-Amylbutylphosphine, in denen für den Butylrest n-Butyl, iso-Butyl, 2-Butyl oder Cyclobutyl stehen kann, Di-tert.-Amylhexylphosphine mit einem beliebigen isomeren Hexylrest, der kein direkt an Phosphor gebundenes tert.-C-Atom aufweist, Di-tert.-Amyloctylphosphine mit einem beliebigen isomeren Octylrest, der kein direkt an Phosphor gebundenes tert.-C-Atom aufweist, Adamantyldimethylphosphin, Adamantyldiethylphosphin, Adamantyldi-n-propylphosphin, Adamantyldiisopropylphosphin, Adamantyldibutylphosphine mit beliebigen isomeren Butylresten,wobei aber höchstens einer der Butylreste ein direkt an Phosphor gebundenes tert.-C-Atom aufweist, Adamantyldihexylphosphine mit beliebigen isomeren Hexylresten, wobei aber höchstens einer der Hexylreste ein direkt an Phosphor gebundenes tert.-C-Atom aufweist, Adamantyldioctylphosphine mit beliebigen isomeren Octylresten, wobei aber höchstens einer der Octylreste ein direkt an Phosphor gebundenes tert.-C-Atom aufweist, Diadamantylmethylphosphin, Diadamantylethylphosphin, Diadamantyl-n-propylphosphin, Diadamantylisopropylphosphin, Diadamantylbutylphosphine, in denen für den Butylrest n-Butyl, iso-Butyl, 2-Butyl oder Cyclobutyl stehen kann, Diadamantylhexylphosphine mit einem beliebigen isomeren Hexylrest, der kein direkt an Phosphor gebundenes tert.-C-Atom aufweist, sowie Diadamantyloctylphosphine mit einem beliebigen isomeren Hexylrest, der kein direkt an Phosphor gebundenes tert.-C-Atom aufweist.

Bevorzugt enthält beim erfindungsgemäßen Verfahren der Katalysator B1 wenigstens eine Verbindung aus der Gruppe der genannten tertiären Phosphine mit linearaliphatischen Substituenten.

Ganz besonders bevorzugte Katalysatoren B1 enthalten Tri-n-butylphosphin und/oder Trioctylphosphin oder Mischungen davon.

Beim erfindungsgemäßen Verfahren kommt der Katalysator B1 im Allgemeinen in einer auf das Gewicht der eingesetzten Polyisocyanatzusammensetzung A bezogenen Konzentration von 0,005 bis 10,0 Gew.-%, bevorzugt von 0,010 bis 5,0 Gew.-% und besonders bevorzugt von 0,1 bis 3,0 Gew.-% zum Einsatz.

### Katalysator B2

Geeignete Katalysatoren B2 für das erfindungsgemäße Verfahren sind prinzipiell alle Verbindungen, die eine schnelle Trimerisierung von Isocyanatgruppen und Uretdiongruppen zu Isocyanuratstrukturen bei hohen Temperaturen von wenigstens 100 °C, bevorzugt von wenigstens 120 °C, stärker bevorzugt von wenigstens 140 °C und am stärksten bevorzugt von wenigstens 160 °C, bewirken.

Schnell heißt dabei, dass die Trimerisierung im finalen Aushärtungsschritt in einen Zeitraum von höchstens 24 Stunden, vorzugsweise höchstens 12 Stunden und stärker bevorzugt höchstens 60 Minuten und am stärksten bevorzugt höchstens 30 Minuten weitgehend abgeschlossen ist. Die Trimerisierungsreaktion ist weitgehend abgeschlossen, wenn nur noch höchstens 40 mol-%, stärker bevorzugt höchstens 20 mol-% und am stärksten bevorzugt höchstens 5 mol-% der im Polyisocyanatpolymer C ursprünglich vorhandenen Summe an reaktiven Gruppen, entsprechend der Summe aus Isocyanat und Uretdiongruppen vorhanden sind. Bevorzugt werden Katalystoren B2 verwendet bei denen bei einer "schnellen Trimerisierung" im Sinne der vorliegenden Anmeldung nach höchstens 6 Stunden bei einer Temperatur von wenigstens 120 °C noch höchstens 20 mol-% der ursprünglich in der Polyisocyanatzusammensetzung A enthaltenen Isocyanatgruppen vorhanden sind. Die Messung der Menge an Rest Isocyanatgruppen erfolgt bevorzugt mittels ATR Spektroskopie anhand des Peakmaximums des Isocyanatabsorptionspeaks gegen die Ausgangszusammensetzung A normiert gegen die CH Schwingungen bei 2700-3100 cm⁻¹.

Die Trimerisierungsreaktion kann gegebenenfalls auch mittels Verfolgung des Tg Wertes gemessen werden. Die Trimerisierungsreaktion ist dann weitgehend abgeschlossen, wenn der Tg des Bauteils bei einer Erhöhung der Vernetzungstemperatur um 20 °C nach 60 Minuten sich um noch höchstens 15 °C, stärker bevorzugt höchstens 10 °C und am stärksten bevorzugt höchstens 5 °C erhöht.

Geeignete Katalysatoren B2 sind dabei insbesondere solche, die bei den für die katalytische Polymerisation verwendeten Reaktionsbedingungen, d.h. Temperatur und Zeit, im Wesentlichen keine Aktivität verglichen mit Katalysator B1 zeigen. "Im Wesentlichen keine Aktivität" bedeutet hierbei, dass der Katalysator B2 bei hierbei herrschenden Reaktionsbedingungen im Vergleich zu B1 einen Reaktionsgeschwindigkeitskoeffizienten der Umsetzung von Isocyanatgruppen k(T)_{ISOB2} hat, der wenigstens um den Faktor 2, bevorzugt Faktor 3, besonders bevorzugt Faktor 4 kleiner ist, als der Reaktionsgeschwindigkeitskoeffizient k(T)_{ISOB1}. Die "Umsetzung von Isocyanatgruppen" bezieht sich auf die Reaktion von Isocyanatgruppen unter Ausbildung wenigstens einer Struktur ausgewählt aus der Gruppe bestehend aus Urethan-, Urea-, Uretdion-, Isocyanurat-, Allophanat-, Biuret-, Iminooxadiazindion- und Oxadiazintrionstrukturen.

Reaktionsgeschwindigkeitskoeffizienten können nach allgemein bekannten Verfahren aus der Umsetzungsgeschwindigkeit der Isocyanatgruppe bei den gewünschten Reaktionstemperaturen gegebenenfalls einzeln in Lösung ermittelt werden. Dazu wird die Reaktion in einem Bereich bis zu max. 10% Umsatz mittels IR oder NIR oder NMR beobachtet und der Abbau der Isocyanatkonzentration gegen die Zeit bei einer gegebenen Temperatur aufgetragen..

Geeignete Katalysatoren B2 für das erfindungsgemäße Verfahren sind beispielsweise einfache tertiäre Amine, wie z.B. Triethylamin, Tributylamin, N,N-Dimethylanilin, N-Ethylpiperidin oder N, N'-Dimethylpiperazin. Geeignete Katalysatoren sind auch die in der GB 2 221 465 beschriebenen tertiären Hydroxyalkylamine, wie z.B. Triethanolamin, N-Methyl-diethanolamin, Dimethylethanolamin, N-Isopropyldiethanolamin und 1-(2-Hydroxyethyl)pyrrolidin, oder die aus der GB 2 222 161 bekannten, aus Gemischen tertiärer bicyclischer Amine, wie z.B. DBU, mit einfachen niedermolekularen aliphatischen Alkoholen bestehenden Katalysatorsysteme.

Als Trimerisierungskatalysatoren B2 für das erfindungsgemäße Verfahren ebenfalls geeignet sind eine Vielzahl unterschiedlicher Metallverbindungen. Geeignet sind beispielsweise die in der DE-A 3 240 613 als Katalysatoren beschriebenen Oktoate und Naphthenate von Mangan, Eisen, Cobalt, Nickel, Kupfer, Zink, Zirkonium, Cer oder Blei oder deren Gemische mit Acetaten von Lithium, Natrium, Kalium, Calcium oder Barium, die aus DE-A 3 219 608 bekannten Natrium- und KaliumSalze von linearen oder verzweigten Alkancarbonsäuren mit bis zu 10 C-Atomen, wie z.B. von Propionsäure, Buttersäure, Valeriansäure, Capronsäure, Heptansäure, Caprylsäure, Pelargonsäure, Caprinsäure und Undecylsäure, die aus der aus EP-A 0 100 129 bekannten Alkali- oder Erdalkalimetallsalze von aliphatischen, cycloaliphatischen oder aromatischen Mono- und Polycarbonsäuren mit 2 bis 20 C-Atomen, wie z.B. Natrium- oder Kaliumbenzoat, die aus der GB-PS 1 391 066 und GB-PS 1 386 399 bekannten Alkaliphenolate, wie z.B. Natrium- oder Kaliumphenolat, die aus der GB 809 809 bekannten Alkali- und Erdalkalioxide, -hydroxide, -carbonate, -alkoholate und -phenolate, Alkalimetallsalze von enolisierbaren Verbindungen sowie Metallsalze schwacher aliphatischer bzw. cycloaliphatischer Carbonsäuren, wie z.B. Natriummethoxid, Natriumacetat, Kaliumacetat, Natriumacetoessigester, Blei-2-ethylhexanoat und Bleinaphthenat, die aus der EP-A 0 056 158 und EP-A 0 056 159 bekannten, mit Kronenethern oder Polyetheralkoholen komplexierten basischen Alkalimetallverbindungen, wie z.B. komplexierte Natrium- oder Kaliumcarboxylate, das aus der EP-A 0 033 581 bekannte Pyrrolidinon-Kaliumsalz, die aus der Anmeldung EP 13196508.9 bekannten ein- oder mehrkernigen Komplexverbindung von Titan, Zirkonium und/oder Hafnium, wie z.B. Zirkoniumtetra-n-butylat, Zirkoniumtetra-2-ethylhexanoat und Zirkoniumtetra-2-ethylhexylat, sowie Zinnverbindungen der in European Polymer Journal, Vol. 16, 147-148 (1979*)* beschriebenen Art, wie z.B. Dibutylzinndichlorid, Diphenylzinndichlorid, Triphenylstannanol, Tributylzinnacetat, Tributylzinnoxid, Zinnoctoat, Dibutyl(dimethoxy)stannan und Tributylzinnimidazolat.

Weitere für das erfindungsgemäße Verfahren geeignete Trimerisierungskatalysatoren B2 sind beispielsweise die aus der DE-A 1 667 309, EP-A 0 013 880 und EP-A 0 047 452 bekannten quaternären Ammoniumhydroxyde, wie z.B. Tetraäthylammoniumhydroxid, Trimethylbenzylammoniumhydroxid, N,N-Dimethyl-N-dodecyl-N-(2-hydroxyäthyl)ammoniumhydroxid, N-(2-Hydroxyäthyl)-N,N-dimethylN-(2,2'-dihydroxymethylbutyl)-ammoniumhydroxid und 1-(2-Hydroxyethyl)-1,4-diazabicyclo-[2.2.2]-octanhydroxid (Monoaddukt von Äthylenoxid und Wasser an 1,4-Diazabicyclo-[2.2.2]-octan), die aus EP-A 37 65 oder EP-A 10 589 bekannten quaternären Hydroxyalkylammoniumhydroxide, wie z.B. N,N,N-Trimethyl-N-(2-hydroxyäthyl)-ammonium-hydroxid, die aus DE-A 2631733, EP-A 0 671 426, EP-A 1 599 526 und US 4,789,705 bekannten Trialkylhydroxylalkylammoniumcarboxylate, wie z.B. N,N,N-Trimethyl-N-2-hydroxypropylammonium-p-tert.-butylbenzoat und N,N,N-Trimethyl-N-2-hydroxypropylammonium-2-ethylhexanoat, die aus der EP-A 1 229 016 bekannten quartären Benzylammoniumcarboxylate, wie z.B. N-Benzyl-N,N-dimethyl-N-ethylammoniumpivalat, N-Benzyl-N,N-dimethyl-N-ethylammonium-2-ethylhexanoat, N-Benzyl-N,N,N-tributylammonium-2-ethylhexanoat, N,N-Dimethyl-N-ethyl-N-(4-methoxy-benzyl)ammonium-2-ethylhexanoat oder N,N,N-Tributyl-N-(4-methoxybenzyl)ammonium-pivalat, die aus der WO 2005/087828 bekannten tetrasubstituierten Ammonium- 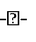 -hydroxycarboxylate, wie z.B. Tetramethylammonium-lactat, die aus der EP-A 0 339 396, EP-A 0 379 914 und EP-A 0 443 167 bekannten quartären Ammonium- oder Phosphoniumfluoride, wie z.B. N-Methyl-N,N,N-trialkylammoniumfluoride mit C₈-C₁₀-Alkylresten, N,N,N,N-Tetra-n-butylammoniumfluorid, N,N,N-Trimethyl-N-benzylammonium-fluorid, Tetramethylphosphoniumfluorid, Tetraethylphosphoniumfluorid oder Tetra-n-butylphosphoniumfluorid, die aus der EP-A 0 798 299, EP-A 0 896 009 und EP-A 0 962 455 bekannten quaternären Ammonium- und Phosphoniumpolyfluoride, wie z.B. Benzyltrimethylammoniumhydrogenpolyfluorid, die aus der EP-A 0 668 271 bekannten Tetraalkylammoniumalkylcarbonate, die durch Umsetzung tertiärer Amine mit Dialkylcarbonaten erhältlich sind, oder betainstrukturierte Quartär-Ammonioalkylcarbonate, die aus der WO 1999/023128 bekannten quaternären Ammoniumhydrogencarbonate, wie z.B. Cholin-bicarbonat, die aus der EP 0 102 482 bekannten, aus tertiären Aminen und alkylierend wirkenden Estern von Säuren des Phosphors erhältlichen quartären Ammoniumsalze, wie z.B. Umsetzungsprodukte von Triethylamin, DABCO oder N-Methylmorpholin mit Methanphosphonsäuredimethylester, oder die aus WO 2013/167404 bekannten tetrasubstituierten Ammoniumsalze von Lactamen, wie z.B. Trioctylammoniumcaprolactamat oder Dodecyltrimethylammoniumcaprolactamat.

Weitere für das erfindungsgemäße Verfahren geeignete Trimerisierungskatalysatoren B2 finden sich beispielsweise in J. H. Saunders und K. C. Frisch, Polyurethanes Chemistry and Technology, S. 94 ff (1962) und der dort zitierten Literatur.

Die Katalysatoren B2 können sowohl einzeln als auch in Form beliebiger Gemische untereinander im erfindungsgemäßen Verfahren eingesetzt werden.

Bevorzugte Katalysatoren B2 sind Metallverbindungen der vorstehend genannten Art, insbesondere Carboxylate und Alkoholate von Alkalimetallen, Erdalkalimetallen, Zinn oder Zirkonium sowie organische Zinnverbindungen der genannten Art.

Besonders bevorzugte Trimerisierungskatalysatoren B2 sind Zinn, Natrium- und Kaliumsalze aliphatischer Carbonsäuren mit 2 bis 20 C-Atomen.

Ganz besonders bevorzugte Trimerisierungskatalysatoren B2 für das erfindungsgemäße Verfahren sind Kaliumacetat und Zinnoctoat.

Als Katalysator wird im Sinne der Erfindung die Kombination aus Wirksubstanz und geeigneten Lösungsmitteln, Co-Aktivatoren, Reaktivverdünnern verstanden, wie Sie in den Beispielen Anwendung findet.

Beim erfindungsgemäßen Verfahren kommt der Trimerisierungskatalysator B2 im Allgemeinen in einer auf die Menge der eingesetzten Polyisocyanatzusammensetzung A bezogenen Konzentration von 0,0005 bis 15,0 Gew.-%, bevorzugt von 0,010 bis 10,0 Gew.-% und besonders bevorzugt von 0,1 bis 5,0 Gew.-% zum Einsatz.

Gemäß eine bevorzugten Ausführungsform der Erfindung wird als Katalysator B2 mindestens eine basische Verbindung, insbesondere Salze von Carbonsäuren eingesetzt. Insbesondere können auch Mischungen verschiedener basischer Verbindungen als Katalysator B2 eingesetzt werden.

Gemäß einer weiteren bevorzugten Ausführungsform der Erfindung wird als Katalysator B2 mindestens eine basische Verbindung der Alkali- oder Erdalkalimetalle, insbesondere deren Salze von Carbonsäuren wie Kaliumacetat, und ein Polyether eingesetzt. Der Polyether hat mindestens 2, bevorzugt mindestens 4, besonders bevorzugt mindestens 6 und insbesondere mindestens 8 aufeinanderfolgende Ethylenoxideinheiten im Molekül.

Gemäß einer besonders bevorzugten Ausführungsform der vorliegenden Erfindung ist der Katalysator B2 ein Polyether mit mindestens 2, bevorzugt 4 und besonders bevorzugt mindestens 6 aufeinanderfolgenden Ethylenoxideinheiten im Molekül. In diesem Polyether ist ein alkalisches Kalium-, Lithium- oder Natriumsalz mit einer Metallionenkonzentration zwischen 0,01 Gew.-% und 50 Gew.-%, bevorzugt zwischen 0,1 Gew.-% und 25 Gew.-%, besonders bevorzugt zwischen 0,5 Gew.-% und 15 Gew.-% und insbesondere zwischen 1 Gew.-% und 10 Gew.-% gelöst. Am meisten bevorzugt ist ein Polyether mit mindestens 7 aufeinanderfolgenden Ethylenoxideinheiten im Molekül, in dem zumindest ein Teil des alkalisches Kaliumsalz gelöst ist.

Beim erfindungsgemäßen Verfahren kommt der Trimerisierungskatalysator B2 bei Verwendung von basischen Salzen von Carbonsäuren im Allgemeinen in einer auf die Menge der eingesetzten Polyisocyanatzusammensetzung A) bezogenen Konzentration von 0,04 bis 15,0 Gew.-%, bevorzugt von 0,10 bis 8,0 Gew.-% und besonders bevorzugt von 0,5 bis 5,0 Gew.-% zum Einsatz. Hierbei wird zur Konzentrationsberechnung als Trimerisierungskatalysator B2 lediglich das Gemisch aus der mindestens einen basischen Verbindung betrachtet.

Die beim erfindungsgemäßen Verfahren zum Einsatz gelangenden Katalysatoren B1 und B2 sind in den Mengen, die zur Initiierung der Vernetzungsreaktion benötigt werden, in der Regel ausreichend in der Polyisocyanatzusammensetzung A löslich oder dispergierbar. Die Zugabe der Katalysatoren B1 und B2 zur Polyisocyanatzusammensetzung A erfolgt daher vorzugsweise in Substanz.

Gegebenenfalls können die Katalysatoren B1 und B2 zur Verbesserung ihrer Einarbeitbarkeit jedoch auch in einem geeigneten organischen Lösungsmittel gelöst eingesetzt werden. Geeignete Lösungsmittel sind alle solche, die die Aktivität der Katalysatoren B1 und B2 bei den gewählten Reaktionsbedingungen nicht negativ beeinflussen, insbesondere keine chemischen Reaktionen mit den Katalysatoren B1 und B2 eingehen, wodurch diese deaktiviert oder "vergiftet" werden. Der Verdünnungsgrad der Katalysatorlösungen kann dabei innerhalb eines sehr breiten Bereichs frei gewählt werden.

Geeignete Katalysatorlösungsmittel sind beispielsweise gegenüber Isocyanatgruppen inerte Lösungsmittel wie z.B. Hexan, Toluol, Xylol, Chlorbenzol, Essigsäureethylester, Essigsäure-butylester, Diethylenglykoldimethylether, Dipropylenglykoldimethylether, Ethylenglykolmonomethyl- oder - ethyletheracetat, Diethylenglykolethyl- und -butyletheracetat, Propylenglykolmonomethyletheracetat, 1-Methoxypropyl-2-acetat, 3- Methoxy-n-butylacetat, Propylenglykoldiacetat, Aceton, Methylethylketon, Methylisobutylketon, Cyclohexanon, Lactone, wie ß-Propiolacton, y-Butyrolacton, ε-Caprolacton und ε-Methylcaprolacton, aber auch Lösungsmittel wie N-Methylpyrrolidon und N-Methylcaprolactam, 1,2-Propylencarbonat, Methylenchlorid, Dimethylsulfoxid, Triethylphosphat oder beliebige Gemische derartiger Lösungsmittel.

Sofern beim erfindungsgemäßen Verfahren Katalysatorlösungsmittel zum Einsatz kommen, werden bevorzugt Katalysatorlösungsmittel, die gegenüber Isocyanaten reaktive Gruppen tragen und in den Polyisocyanuratkunststoff eingebaut werden können, verwendet. Beispiele für solche Lösungsmittel sind ein- oder mehrwertige einfache Alkohole, wie z.B. Methanol, Ethanol, n-Propanol, Isopropanol, n-Butanol, n-Hexanol, 2-Ethyl-1-hexanol, Ethylenglykol, Propylenglykol, die isomeren Butandiole, 2-Ethyl-1,3-hexandiol oder Glycerin; Etheralkohole, wie z.B. 1-Methoxy-2-propanol, 3-Ethyl-3-hydroxymethyloxetan, Tetrahydrofurfurylalkohol, Ethylenglykol-monomethylether, Ethylenglykolmonoethylether, Ethylenglykolmonobutylether, Diethylen-glykolmonomethylether, Diethylenglykolmonoethylether, Diethylenglykolmono-butylether, Diethylenglykol, Dipropylenglykol oder auch flüssige höhermolekulare Polyethylenglykole, Polypropylenglykole, gemischte Polyethylen/polypropylenglykole sowie deren Monoalkylether; Esteralkohole, wie z.B. Ethylenglykolmonoacetat, Propylen-glykolmonolaurat, Glycerinmono- und diacetat, Glycerinmonobutyrat oder 2,2,4-Trimethyl-1,3-pentandiol-monoisobutyrat; ungesättigte Alkohole wie z.B. Allylalkohol, 1,1-Dimethyl-allylalkohol oder Oleinalkohol; araliphatische Alkohole wie z.B. Benzylalkohol; N-monosubstituierte Amide, wie z.B. N-Methylformamid, N-Methylacetamid, Cyanacetamid oder 2-Pyrrolidinon oder beliebige Gemische derartiger Lösungsmittel.

Weiterhin hat sich gezeigt, dass Verbindungen gemäß der unten stehenden Formel (II) besonders gut als Katalysatoren B2 geeignet sind 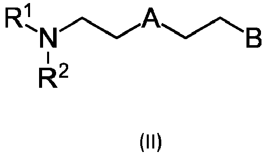
Wobei R¹ und R² unabhängig voneinander ausgewählt sind aus der Gruppe bestehend aus Wasserstoff, Methyl, Ethyl, Propyl, Isopropyl, Butyl, Isobutyl, verzweigtem C5-Alkyl, unverzweigtem C5-Alkyl, verzweigtem C6-Alkyl, unverzweigtem C6-Alkyl, verzweigtem C7-Alkyl und unverzweigtem C7-Alkyl;
A ausgewählt ist aus der Gruppe bestehend aus O, S und NR³, wobei R³ ausgewählt ist aus der Gruppe bestehend aus Wasserstoff, Methyl, Ethyl, Propyl, Isopropyl, Butyl und Isobutyl; und
B unabhängig von A ausgewählt ist aus der Gruppe bestehend aus OH, SH NHR⁴ und NH₂, wobei R⁴ ausgewählt ist aus der Gruppe bestehend aus Methy, Ethyl und Propyl

In einer bevorzugten Ausführungsform ist A NR³, wobei R³ ausgewählt ist aus der Gruppe bestehend aus Wasserstoff, Methyl, Ethyl, Propyl, Isopropyl, Butyl und Isobutyl. Bevorzugt ist R³ Methyl oder Ethyl. Besonders bevorzugt ist R³ Methyl.

In einer ersten Variante dieser Ausführungsform ist B OH und R¹ und R² sind unabhängig voneinander ausgewählt aus der Gruppe bestehend aus Wasserstoff, Methyl, Ethyl, Propyl, Isopropyl, Butyl, Isobutyl, verzweigtem C5-Alkyl, unverzweigtem C5-Alkyl, verzweigtem C6-Alkyl, unverzweigtem C6-Alkyl, verzweigtem C7-Alkyl und unverzweigtem C7-Alkyl. Bevorzugt sind R¹ und R² unabhängig voneinander Methyl oder Ethyl. Besonders bevorzugt sind R¹ und R² Methyl.

In einer zweiten Variante dieser Ausführungsform ist B SH und R¹ und R² sind unabhängig voneinander ausgewählt aus der Gruppe bestehend aus Wasserstoff, Methyl, Ethyl, Propyl, Isopropyl, Butyl, Isobutyl, verzweigtem C5-Alkyl, unverzweigtem C5-Alkyl, verzweigtem C6-Alkyl, unverzweigtem C6-Alkyl, verzweigtem C7-Alkyl und unverzweigtem C7-Alkyl. Bevorzugt sind R¹ und R² unabhängig voneinander Methyl oder Ethyl. Besonders bevorzugt sind R¹ und R² Methyl.

In einer dritten Variante dieser Ausführungsform ist B NHR⁴ und R¹ und R² sind unabhängig voneinander ausgewählt aus der Gruppe bestehend aus Wasserstoff, Methyl, Ethyl, Propyl, Isopropyl, Butyl, Isobutyl, verzweigtem C5-Alkyl, unverzweigtem C5-Alkyl, verzweigtem C6-Alkyl, unverzweigtem C6-Alkyl, verzweigtem C7-Alkyl und unverzweigtem C7-Alkyl. Bevorzugt sind R¹ und R² unabhängig voneinander Methyl oder Ethyl. Besonders bevorzugt sind R¹ und R² Methyl. In dieser Variante ist R4 ausgewählt aus der Gruppe bestehend aus Methyl, Ethyl und Propyl. Bevorzugt ist R⁴ Methyl oder Ethyl. Besonders bevorzugt ist R⁴ Methyl.

In einer vierten Variante dieser Ausführungsform ist B NH₂ und R¹ und R² sind unabhängig voneinander ausgewählt aus der Gruppe bestehend aus Wasserstoff, Methyl, Ethyl, Propyl, Isopropyl, Butyl, Isobutyl, verzweigtem C5-Alkyl, unverzweigtem C5-Alkyl, verzweigtem C6-Alkyl, unverzweigtem C6-Alkyl, verzweigtem C7-Alkyl und unverzweigtem C7-Alkyl. Bevorzugt sind R¹ und R² unabhängig voneinander Methyl oder Ethyl. Besonders bevorzugt sind R¹ und R² Methyl.

In einer weiteren bevorzugten Ausführungsform ist A Sauerstoff.

In einer ersten Variante dieser Ausführungsform ist B OH und R¹ und R² sind unabhängig voneinander ausgewählt aus der Gruppe bestehend aus Wasserstoff, Methyl, Ethyl, Propyl, Isopropyl, Butyl, Isobutyl, verzweigtem C5-Alkyl, unverzweigtem C5-Alkyl, verzweigtem C6-Alkyl, unverzweigtem C6-Alkyl, verzweigtem C7-Alkyl und unverzweigtem C7-Alkyl. Bevorzugt sind R¹ und R² unabhängig voneinander Methyl oder Ethyl. Besonders bevorzugt sind R¹ und R² Methyl.

In einer zweiten Variante dieser Ausführungsform ist B SH und R¹ und R² sind unabhängig voneinander ausgewählt aus der Gruppe bestehend aus Wasserstoff, Methyl, Ethyl, Propyl, Isopropyl, Butyl, Isobutyl, verzweigtem C5-Alkyl, unverzweigtem C5-Alkyl, verzweigtem C6-Alkyl, unverzweigtem C6-Alkyl, verzweigtem C7-Alkyl und unverzweigtem C7-Alkyl. Bevorzugt sind R¹ und R² unabhängig voneinander Methyl oder Ethyl. Besonders bevorzugt sind R¹ und R² Methyl.

In einer dritten Variante dieser Ausführungsform ist B NHR⁴ und R¹ und R² sind unabhängig voneinander ausgewählt aus der Gruppe bestehend aus Wasserstoff, Methyl, Ethyl, Propyl, Isopropyl, Butyl, Isobutyl, verzweigtem C5-Alkyl, unverzweigtem C5-Alkyl, verzweigtem C6-Alkyl, unverzweigtem C6-Alkyl, verzweigtem C7-Alkyl und unverzweigtem C7-Alkyl. Bevorzugt sind R¹ und R² unabhängig voneinander Methyl oder Ethyl. Besonders bevorzugt sind R¹ und R² Methyl. In dieser Variante ist R⁴ ausgewählt aus der Gruppe bestehend aus Methyl, Ethyl und Propyl. Bevorzugt ist R⁴ Methyl oder Ethyl. Besonders bevorzugt ist R⁴ Methyl.

In einer vierten Variante dieser Ausführungsform ist B NH₂ und R¹ und R² sind unabhängig voneinander ausgewählt aus der Gruppe bestehend aus Wasserstoff, Methyl, Ethyl, Propyl, Isopropyl, Butyl, Isobutyl, verzweigtem C5-Alkyl, unverzweigtem C5-Alkyl, verzweigtem C6-Alkyl, unverzweigtem C6-Alkyl, verzweigtem C7-Alkyl und unverzweigtem C7-Alkyl. Bevorzugt sind R¹ und R² unabhängig voneinander Methyl oder Ethyl. Besonders bevorzugt sind R¹ und R² Methyl.

In noch einer weiteren bevorzugten Ausführungsform ist A Schwefel.

In einer ersten Variante dieser Ausführungsform ist B OH und R¹ und R² sind unabhängig voneinander ausgewählt aus der Gruppe bestehend aus Wasserstoff, Methyl, Ethyl, Propyl, Isopropyl, Butyl, Isobutyl, verzweigtem C5-Alkyl, unverzweigtem C5-Alkyl, verzweigtem C6-Alkyl, unverzweigtem C6-Alkyl, verzweigtem C7-Alkyl und unverzweigtem C7-Alkyl. Bevorzugt sind R¹ und R² unabhängig voneinander Methyl oder Ethyl. Besonders bevorzugt sind R¹ und R² Methyl.

In einer zweiten Variante dieser Ausführungsform ist B SH und R¹ und R² sind unabhängig voneinander ausgewählt aus der Gruppe bestehend aus Wasserstoff, Methyl, Ethyl, Propyl, Isopropyl, Butyl, Isobutyl, verzweigtem C5-Alkyl, unverzweigtem C5-Alkyl, verzweigtem C6-Alkyl, unverzweigtem C6-Alkyl, verzweigtem C7-Alkyl und unverzweigtem C7-Alkyl. Bevorzugt sind R¹ und R² unabhängig voneinander Methyl oder Ethyl. Besonders bevorzugt sind R¹ und R² Methyl.

In einer dritten Variante dieser Ausführungsform ist B NHR⁴ und R¹ und R² sind unabhängig voneinander ausgewählt aus der Gruppe bestehend aus Wasserstoff, Methyl, Ethyl, Propyl, Isopropyl, Butyl, Isobutyl, verzweigtem C5-Alkyl, unverzweigtem C5-Alkyl, verzweigtem C6-Alkyl, unverzweigtem C6-Alkyl, verzweigtem C7-Alkyl und unverzweigtem C7-Alkyl. Bevorzugt sind R¹ und R² unabhängig voneinander Methyl oder Ethyl. Besonders bevorzugt sind R¹ und R² Methyl. In dieser Variante ist R⁴ ausgewählt aus der Gruppe bestehend aus Methyl, Ethyl und Propyl. Bevorzugt ist R⁴ Methyl oder Ethyl. Besonders bevorzugt ist R⁴ Methyl.

In einer vierten Variante dieser Ausführungsform ist B NH₂ und R¹ und R² sind unabhängig voneinander ausgewählt aus der Gruppe bestehend aus Wasserstoff, Methyl, Ethyl, Propyl, Isopropyl, Butyl, Isobutyl, verzweigtem C5-Alkyl, unverzweigtem C5-Alkyl, verzweigtem C6-Alkyl, unverzweigtem C6-Alkyl, verzweigtem C7-Alkyl und unverzweigtem C7-Alkyl. Bevorzugt sind R¹ und R² unabhängig voneinander Methyl oder Ethyl. Besonders bevorzugt sind R¹ und R² Methyl.

Weiterhin geeignet sind Addukte einer Verbindung gemäß Formel (II) und einer Verbindung mit wenigstens einer Isocyanatgruppe.

Unter dem Oberbegriff "Addukt" werden Urethan-, Thiourethan- und Harnstoffaddukte einer Verbindung gemäß Formel (II) mit einer Verbindung mit wenigstens einer Isocyanatgruppe verstanden. Besonders bevorzugt ist ein Urethanaddukt. Die erfindungsgemäßen Addukte entstehen dadurch, dass ein Isocyanat mit der funktionellen Gruppe B der in Formel (II) definierten Verbindung reagiert. Wenn B eine Hydroxylgruppe ist, so entsteht ein Urethanaddukt. Wenn B eine Thiolgruppe ist, entsteht ein Thiourethanaddukt. Und wenn B NH₂ oder NHR⁴ ist, entsteht ein Harnstoffaddukt.

### Additive E

Die nach dem erfindungsgemäßen Verfahren erhältlichen Polyisocyanuratkunststoffe D zeichnen sich bereits als solche, d. h. ohne Zusatz entsprechender Hilfs-und Zusatzmittel E, durch eine sehr gute Lichtbeständigkeit aus, insbesondere bei Verwendung einer aliphatischen Polyisocyanatzusammensetzung A. Dennoch können bei ihrer Herstellung gegebenenfalls übliche Hilfs- und Zusatzmittel E, wie beispielsweise übliche Füllstoffe, UV-Stabilisatoren, Antioxidantien, Formtrennmittel, Wasserfänger, Slipadditive, Entschäumer, Verlaufsmittel, Rheologieadditive, Flammschutzmittel und/oder Pigmente, mitverwendet werden. Diese Hilfs- und Zusatzmittel E, ausgenommen Füllstoffe und Flammschutzmittel, liegen üblicherweise in einer Menge von weniger als 10 Gew.-%, vorzugsweise weniger als 5 Gew.-%, besonders bevorzugt bis zu 3 Gew.-%, bezogen auf die Polyisocyanatzusammensetzung A, im Polyisocyanuratkunststoff D vor. Flammschutzmittel liegen üblicherweise in Mengen von höchstens 70 Gew.-%, vorzugsweise höchstens 50 Gew.-%, besonders bevorzugt höchstens 30 Gew.-%, berechnet als Gesamtmenge an eingesetzten Flammschutzmitteln bezogen auf die Polyisocyanatzusammensetzung A, im Polyisocyanuratkunststoff vor.

Geeignete Füllstoffe E_{w} sind beispielsweise Al(OH)₃, CaCO₃, Metallpigmente wie TiO₂ und weitere bekannte übliche Füllstoffe. Diese Füllstoffe E_{w} werden vorzugsweise in Mengen von höchstens 95 Gew.-%, bevorzugt höchstens 80 Gew.-%, besonders bevorzugt höchstens 50 Gew.-%, berechnet als Gesamtmenge an eingesetzten Füllstoffen bezogen auf die Polyisocyanatzusammensetzung A, eingesetzt.

Geeignete UV-Stabilisatoren Eₓ können vorzugsweise ausgewählt werden aus der Gruppe, bestehend aus Piperidinderivaten, wie z.B. 4-Benzoyloxy-2,2,6,6-tetramethylpiperidin, 4-Benzoyloxy-1,2,2,6,6-pentamethylpiperidin, Bis-(2,2,6,6-tetra-methyl-4-piperidyl)-sebacat, Bis(1,2,2,6,6-pentamethyl-1-4-piperidinyl)-sebacat, Bis-(2,2,6,6-tetramethyl-4-piperidyl)-suberat, Bis-(2,2,6,6-tetramethyl-4-piperidyl)-dodecandioat; Benzophenonderivaten, wie z.B. 2,4-Dihydroxy-, 2-Hydroxy-4-methoxy-, 2-Hydroxy-4-octoxy-, 2-Hydroxy-4-dodecyloxy- oder 2,2'-Dihydroxy-4-dodecyloxy-benzophenon; Benztriazolderivaten, wie z.B. 2-(2H-Benzotriazol-2-yl)-4,6-di-tert-pentylphenol, 2-(2H-Benzotriazol-2-yl)-6-dodecyl-4-methylphenol, 2-(2H-Benzotriazol-2-yl)-4,6-bis(1-methyl-1-phenylethyl)phenol, 2-(5-Chlor-2H-benzotriazol-2-yl)-6-(1,1-dimethylethyl)-4-methylphenol, 2-(2H-benzotriazol-2-yl)-4-(1,1,3,3-tetramethylbutyl)phenol, 2-(2H-Benzotriazol-2-yl)-6-(1-methyl-1-phenylethyl)-4-(1,1,3,3-tetramethylbutyl)phenol, Isooctyl-3-(3-(2H-benzotriazol-2-yl)-5-(1,1-dimethylethyl)-4-hydroxyphenylpropionat), 2-(2H-Benzotriazol-2-yl)-4,6-bis(1,1-dimethylethyl)phenol, 2-(2H-Benzotriazol-2-yl)-4,6-bis(1-methyl-1-phenylethyl)phenol, 2-(5-Chlor-2H-benzotriazol-2-yl)-4,6-bis(1,1-dimethylethyl)phenol; Oxalaniliden, wie z.B. 2-Ethyl-2'-ethoxy- oder 4-Methyl-4'-methoxyoxalanilid; Salicylsäureestern, wie z.B. Salicylsäurephenylester, Salicylsäure-4-tert-butylphenylester, Salicylsäure-4-tert-octylphenylester; Zimtsäureesterderivaten, wie z.B. α-Cyano-β-methyl-4-methoxyzimtsäuremethylester, α-Cyano-β-methyl-4-methoxyzimtsäurebutyl-ester, α-Cyano-β-phenylzimtsäureethylester, α-Cyano-β-phenylzimtsäureisooctylester; und Malonesterderivaten, wie z.B. 4-Methoxy-benzylidenmalonsäuredimethylester, 4-Methoxybenzylidenmalonsäurediethylester, 4-Butoxy-benzylidenmalonsäuredimethylester. Diese bevorzugten Lichtstabilisatoren können sowohl einzeln als auch in beliebigen Kombinationen untereinander zum Einsatz kommen.

Besonders bevorzugte UV-Stabilisatoren Eₓ für die erfindungsgemäß herstellbaren Polyisocyanuratkunststoffe D sind solche, die Strahlung einer Wellenlänge < 400 nm vollständig absorbieren. Hierzu zählen beispielsweise die genannten Benztriazolderivate. Ganz besonders bevorzugte UV-Stabilisatoren sind 2-(5-Chlor-2H-benzotriazol-2-yl)-6-(1,1-dimethylethyl)-4-methylphenol, 2-(2H-benzotriazol-2-yl)-4-(1,1,3,3-tetramethylbutyl)phenol und/oder 2-(5-Chlor-2H-benzotriazol-2-yl)-4,6-bis(1,1-dimethylethyl)phenol.

Gegebenenfalls werden ein oder mehrere der beispielhaft genannten UV-Stabilisatoren Eₓ der Polyisocyanatzusammensetzung A vorzugsweise in Mengen von 0,001 bis 3,0 Gew.-%, besonders bevorzugt 0,01 bis 2 Gew.-%, berechnet als Gesamtmenge an eingesetzten UV-Stabilisatoren bezogen auf das Gesamtgewicht der Polyisocyanatzusammensetzung A zugesetzt.

Geeignete Antioxidantien E_{y} sind vorzugsweise sterisch gehinderten Phenole, welche vorzugsweise ausgewählt werden können aus der Gruppe, bestehend aus 2,6-Di-tert-butyl-4-methylphenol (lonol), Pentaerythrit-tetrakis(3-(3,5-di-tert-butyl-4-hydroxy-phenyl)-propionat), Octadecyl-3-(3,5-di-tert-butyl-4-hydroxyphenyl)-propionat, Triethylen-glykol-bis(3-tert-butyl-4-hydroxy-5-methylphenyl)propionat, 2,2'-Thio-bis(4-methyl-6-tert-butylphenol) und 2,2'-Thiodiethyl-bis[3-(3,5-di-tert-butyl-4-hydroxyphenyl)propionat]. Diese können bei Bedarf sowohl einzeln als auch in beliebigen Kombinationen untereinander eingesetzt werden.

Diese Antioxidantien E_{y} werden vorzugsweise in Mengen von 0,01 bis 3,0 Gew.-%, besonders bevorzugt 0,02 bis 2,0 Gew.-%, berechnet als Gesamtmenge an eingesetzten Antioxidantien bezogen auf die Polyisocyanatzusammensetzung A eingesetzt.

Das erfindungsgemäße Verfahren kann, abgesehen von den geringen Mengen gegebenenfalls mitzuverwendender Katalysatorlösungsmittel, lösungsmittelfrei durchgeführt werden. Insbesondere bei der erfindungsgemäßen Verwendung zur Herstellung von Beschichtungen oder Folien kann die Polyisocyanatzusammensetzung A zur Verringerung der Verarbeitungsviskosität gegebenenfalls aber auch mit organischen Lösungsmitteln verdünnt werden. Hierfür geeignete Lösungsmittel sind beispielsweise die bereits vorstehend beschriebenen, gegenüber Isocyanatgruppen inerten Katalysatorlösungsmittel.

Bei der erfindungsgemäßen Verwendung zur Herstellung von Folien, Halbzeugen oder Formteilen können als weitere Hilfs- und Zusatzmittel E schließlich auch interne Formtrennmittel E_{z} zugesetzt werden.

Bei diesen handelt es sich vorzugsweise um die als Formtrennmittel bekannten Perfluoralkyl- oder Polysiloxaneinheiten enthaltenden nichtionischen Tenside, quartäre Alkylammoniumsalze, wie z.B. Trimethylethylammoniumchlorid, Trimethylstearyl-ammoniumchlorid, Dimethylethylcetylammoniumchlorid, Triethyldodecylammoniumchlorid, Trioctylmethylammoniumchlorid und Diethylcyclohexyldodecylammoniumchlorid, saure Mono- und Dialkylphosphate mit 2 bis 18 Kohlenstoffatomen im Alkylrest, wie z.B. Ethylphosphat, Diethylphosphat, Isopropylphosphat, Diisopropylphosphat, Butylphosphat, Dibutylphosphat, Octylphosphat, Dioctylphosphat, Isodecylphosphat, Diisodecylphosphat, Dodecylphosphat, Didodecylphosphat, Tridecanolphosphat, Bis(tridecanol)-phosphat, Stearylphosphat, Distearylphosphat und beliebige Gemische solcher Formtrennmittel.

Besonders bevorzugte Formtrennmittel E_{z} sind die genannten sauren Mono- und Dialkylphosphate, ganz besonders bevorzugt solche mit 8 bis 12 Kohlenstoffatomen im Alkylrest.

Interne Formtrennmittel E_{z} werden beim erfindungsgemäßen Verfahren gegebenenfalls vorzugsweise in Mengen von 0,01 bis 3,0 Gew.-%, besonders bevorzugt 0,02 bis 2,0 Gew.-%, berechnet als Gesamtmenge an eingesetztem internem Formtrennmittel bezogen auf die Polyisocyanatzusammensetzung A eingesetzt.

Bei der Herstellung eines Polyisocyanatpolymers C wird im ersten Schritt eine Mischung der beschriebenen Polyisocyanatzusammensetzung A, eines Katalysators B1 und eines Katalysators B2 bereitgestellt. Der Polyisocyanatzusammensetzung A kann dabei gegebenenfalls unter Vakuum oder unter Inertgas, wie z.B. Stickstoff, und gegebenenfalls unter Mitverwendung der vorstehend genannten Lösungsmittel sowie Hilfs- und Zusatzmittel, der Katalysatoren B1 und B2 oder ein Gemisch unterschiedlicher Katalysatoren B1 und ein Gemisch unterschiedlicher Trimerisierungskatalysatoren B2 zugesetzt werden und mit Hilfe eines geeigneten Mischaggregats homogen eingemischt werden. Die Zugabe von Katalysator B1 und B2 und dem gegebenenfalls mitzuverwendenden Lösungsmittel sowie Hilfs- und Zusatzmitteln E kann dabei in beliebiger Reihenfolge nacheinander oder im Gemisch in den oben angegebenen Mengen in der Regel bei einer Temperatur von -40°C bis 100 °C, vorzugsweise von 0°C bis 80 °C, besonders bevorzugt von 10°C bis 60 °C, stattfinden.

Die Applikation der so erhaltenen katalysierten Reaktionsmischungen kann je nach Verwendungszweck, nach unterschiedlichen an sich bekannten Methoden erfolgen. Zur Herstellung von Folien oder Beschichtungen, wie z.B. Lacken, kann eine Mischung aus Katalysator B1, Katalysator B2 und Polyisocyanatzusammensetzung A beispielsweise durch Sprühen, Spritzen, Streichen, Tauchen, Fluten, Drucken, Rakeln, Walzen in einer oder mehrerer Schichten auf beliebige Untergründe, wie z.B. Metall, Holz, Glas, Stein, keramische Materialien, Beton, harte und flexible Kunststoffe, Textilien, Leder und Papier, aufgebracht werden, die vor der Beschichtung gegebenenfalls auch mit üblichen Grundierungen versehen werden können.

Zur Herstellung massiver Körper, wie z.B. Halbzeuge oder Formteile, kann die Mischung aus Katalysator B1, Katalysator B2 und Polyisocyanatzusammensetzung A beispielsweise durch einfaches Vergießen von Hand, oder mit Hilfe geeigneter Maschinen, wie z.B. den in der Polyurethantechnologie üblichen Niederdruck- oder Hochdruckmaschinen in offene oder geschlossene Formen gefüllt werden.

### Katalytische Vernetzung

In der vorliegenden Anmeldung wird zwischen einer "katalytischen Polymerisation" und einer "katalytischen Trimerisierung" unterschieden. Die katalytische Polymerisation erfolgt bei einer Temperatur von höchstens 100 °C und wird bevorzugt durch Anwesenheit des Katalysator B1 katalysiert. Ergebnis der "katalytischen Polymerisation" ist das Polyisocyanatpolymer C, das sich dadurch auszeichnet, dass bevorzugt wenigstens 5 Gew.-%, bevorzugt wenigstens 10 Gew.-%, besonders bevorzugt wenigstens 20 Gew.-% und ganz besonders bevorzugt wenigstens 30 Gew.-%, der in der Polyisocyanatzusammensetzung A vorhandenen Isocyanate zu Uretdiongruppen umgesetzt wurden.

Hiervon abzugrenzen ist die katalytische Trimerisierung, die in einem weiteren auf die katalytische Polymerisation folgenden Verfahrensschritt bei einer Temperatur, die über der Temperatur der katalytischen Polymerisation liegt, durchgeführt wird.

Die katalytische Trimerisierung wird bei einer Temperatur durchgeführt, die wenigstens 20 °C, bevorzugt wenigstens 40 °C und stärker bevorzugt wenigstens 60 °C höher liegt als die Temperatur, bei der die katalytische Polymerisation durchgeführt wird.

Die katalytische Polymerisation der Polyisocyanatzusammensetzung A zu einem Polyisocyanatpolymer C startet typischerweise mit Zugabe des Katalysators. Die Reaktionsgeschwindigkeit und Selektivität der Umsetzung zu Uretdiongruppen kann gegebenenfalls durch Erwärmen der Polyisocyanatzusammensetzung A bzw. der beschichteten Substrate bzw. befüllten Formen, kontrolliert werden, wobei die optimale mittlere Reaktionstemperatur von -20 °C bis 100 °C, vorzugsweise von 0 bis 60 °C, besonders bevorzugt von 5 bis 30 °C beträgt.

In einer bevorzugten Ausführungsform des erfindungsgemäßen Verfahrens wird eine relativ langsame Vernetzung während der katalytischen Polymerisation bevorzugt, um eine gute Wärmeabfuhr an die Umgebung zu ermöglichen und eine Überhitzung des Produktes oder die Aktivierung des Katalysators B2 zu vermeiden. Die katalytische Polymerisation erfolgt daher über nach einem Zeitraum von mindestens 6 Stunden bis zu 14 Tagen bis sie wie unten definiert "weitgehend abgeschlossen" ist.

Da das Ziel der katalytischen Polymerisation die Herstellung eines transportfähigen Isocyanatpolymers C ist, wird die katalytische Polymerisation vorzugsweise bis zu einem Punkt geführt, bei dem das entstehende Isocyanatpolymer C ein Modul G' bestimmt durch ein Platte/Platte-Rheometer gemäß ISO 6721-10:2015-09 bei einer Frequenz von 1/s bei 23°C von wenigstens 1^{∗}10⁶ Pa, bevorzugt 5^{∗}10⁶ Pa und besonders bevorzugt 1^{∗}10⁷ Pa aufweist. An diesem Punkt ist das Polyisocyanatpolymer C "trocken" im Sinne dieser Anmeldung.

Der Verlauf der Reaktion kann anfangs noch durch titrimetrische Bestimmung des NCO-Gehaltes verfolgt werden, bei fortschreitender Umsetzung setzt aber rasch eine Gelierung und Verfestigung des Reaktionsgemisches ein, was nasschemische Analyseverfahren unmöglich macht. Der weitere Umsatz der Isocyanatgruppen kann dann nur noch durch spektroskopische Methoden, beispielsweise durch ATR-Spektroskopie anhand der Intensität der Isocyanatbande bei ca. 2270 cm⁻¹ verfolgt werden.

Die katalytische Polymerisation bzw. katalytische Trimerisierung gilt insbesondere dann als abgeschlossen, wenn innerhalb eines Zeitraums von mindestens 3 Stunden sich die Höhe des Peakmaximums von mindestens einer funktionelle Gruppe aus der Liste Isocyanat, Isocyanurat, Uretdion um nicht mehr als 5% verändert, bestimmt mittels abgeschwächter Totalreflexion Infrarotspektroskopie (ATR) gegen die Ausgangszusammensetzung A oder C.

Gemäß einer bevorzugten Ausführungsform des erfindungsgemäßen Verfahrens ist die katalytische Polymerisation dann "weitgehend abgeschlossen", wenn die Polyisocyanatzusammensetzung A einen Modul G' von mindestens 10⁶ Pa erreicht hat und sich der G' innerhalb von 6 Stunden um nicht mehr als 10% verändert.

### Isocyanatpolymer C

In einer bevorzugten Ausführungsform führt die katalytische Polymerisation mit einem erfindungsgemäß geeigneten Katalysator B1 zu einem Produkt mit einer Glasübergangstemperatur T_{g} zwischen 0 °C und 90 °C auf. Stärker bevorzugt liegt die Glasübergangstemperatur zwischen 10 °C und 70 °C, am stärksten bevorzugt liegt die Glasübergangstemperatur zwischen 25 °C und 60 °C

Dieses Produkt weist ein Modul G' bestimmt durch ein Platte/Platte-Rheometer gemäß ISO 6721-10:2015-09 bei einer Frequenz von 1/s bei 23°C von wenigstens 1^{∗}10⁶ Pa , bevorzugt wenigstens 5^{∗}10⁶ Pa und besonders bevorzugt wenigstens 1^{∗}10⁷ Pa auf und ist somit trocken und kann somit blockfrei gegen Oberflächen, die nicht vom Reaktionsgemisch bedeckt sind, gestapelt werden.

In einer weiteren Ausführungsform des erfindungsgemäßen Verfahrens weist das Polyisocyanatpolymer C eine Glasübergangstemperatur auf, die im Bereich +/- 30 ° der bei der katalytischen Polymerisation herrschenden Umgebungstemperatur liegt.

In einer besonders bevorzugten Ausführungsform des erfindungsgemäßen Verfahrens weist das Polyisocyanatpolymer C eine Glasübergangstemperatur auf, die wenigstens der bei der katalytischen Polymerisation herrschenden Umgebungstemperatur entspricht. Es ist besonders bevorzugt, dass die Glasübergangstemperatur des Polyisocyanatpolymers am Ende der katalytischen Polymerisation und am Anfang der weiter unten in dieser Anmeldung definierten katalytischen Trimerisierung maximal 60 °C beträgt.

Es ist bevorzugt, dass das Polyisocyanatpolymer C mindestens 5 Gew.% Uretdiongruppen bezogen auf die Menge Isocyanatgruppen der Polyisocyanatzusammensetzung A zur weiteren Reaktion zum Polyisocyanuratkunststoff D aufweist.

Als besonders praxisgerecht hat es sich erwiesen, die katalytische Polymerisation der Polyisocyanatzusammensetzung A bis zu einem Umsetzungsgrad durchzuführen, bei dem mehr als 10 %, insbesondere mehr als 20 %, besonders bevorzugt mehr als 30 % der ursprünglich in der Polyisocyanatzusammensetzung A enthaltenen Isocyanatgruppen noch als freie oder reversibel geblockte Isocyanatgruppen in Form von Uretdiongruppen vorhanden sind, wobei G' des erhaltenen Polyisocyanatpolymer C größer 1^{∗}10⁶ Pa G' betragen soll. Anders ausgedrückt sind in dem Polyisocyanatpolymer C mehr als 10 %, insbesondere mehr als 20 %, besonders bevorzugt mehr als 30 % der ursprünglich in der Polyisocyanatzusammensetzung A enthaltenen Isocyanatgruppen noch in einer Form vorhanden, die während der katalytischen Trimerisierung, unter den gegebenen Reaktionsbedingungen unter Einwirkung einer Temperatur wenigstens 100 °C bevorzugt wenigstens 120 °C, besonders bevorzugt wenigstens 140 °C und ganz besonders bevorzugt wenigstens 180°C von Katalysator B2 aktiviert und zu einem Isocyanurat umgesetzt werden können.

Gemäß einer bevorzugten Ausführungsform ist das Polyisocyanatpolymer C am Ende der katalytischen Polymerisation bereits so hoch vernetzt, dass es nicht vollständig in Lösemitteln gelöst werden kann.

### Umformung des Polyisocyanatpolymers C

Gemäß einer bevorzugten Ausführungsform der Erfindung erfolgt zwischen der katalytischen Polymerisation und der katalytischen Trimerisierung bzw. während der katalytischen Trimerisierung eine Umformung des Polyisocyanatpolymers C. Die Umformung kann dabei z.B. durch Erwärmen des Polyisocyanatpolymers C von über dessen Glasübergangstemperatur, insbesondere 1°C bis 100 °C über dessen Glasübergangstemperatur, besonders bevorzugt 10°C bis 50 °C über dessen Glasübergangstemperatur erfolgen.

In einer besonderen Ausführungsform der vorliegenden Erfindung wird die Temperatur für die Umformung so gewählt, dass diese unterhalb der Reaktionstemperatur für die katalytische Trimerisierung liegt. Somit kann das umgeformte Präpolymer C weiter gelagert und - falls erforderlich - vor der abschließenden katalytischen Trimerisierung erneut umgeformt werden.

In einer anderen bevorzugten Ausführungsform werden der Umformungschritt und die katalytische Trimerisierung miteinander verbunden. Hierbei erfolgt die Umformung bei einer gegenüber der vorangehenden Ausführungsform erhöhten Temperatur. Die Temperatur bei der Umformung liegt in dieser alternativen Ausführungsform vorzugsweise im Bereich der für die katalytische Trimerisierung erforderlichen Temperaturen. Dies ist insbesondere bei Umformungsprozessen vorteilhaft, deren Dauer wesentlich geringer ist als die Dauer der katalytischen Trimerisierung bei der gegebenen Temperatur. So kann die Umformung abgeschlossen werden, bevor so viele freie oder reversibel geblockte Isocyanatgruppen des Präpolymers C katalytisch trimerisiert wurden, dass eine Umformung wegen der Härte des Werkstücks nicht mehr möglich ist. Ein solcher schneller Umformungsschritt kann besonders vorteilhaft mit einer beheizten Presse durchgeführt werden.

In einer bevorzugten Ausführungsform der vorliegenden Erfindung werden die katalytische Polymerisation und die katalytische Trimerisierung im Rahmen eines kontinuierlicher Herstellungsverfahrens durchgeführt. Erfindungsgemäß besonders gut geeignete Verfahren sind Lack und Klebstoffauftrag durch Walzen, Rakel, Sprühköpfe, Fluten, Drucken in kontinuierlich laufenden Beschichtungsanlagen, Filamentwickelverfahren, Pultrusionsverfahren, Prepregverfahren, Infusionsverfahren, wobei allen diesen Verfahren gemeinsam ist, dass sie mit mindestens zwei unterschiedliche Reaktionstemperaturen und / oder Umgebungstemperaturen beinhalten.

In einer weiteren Ausführungsform der vorliegenden Erfindung werden die katalytische Polymerisation und die katalytische Trimerisierung im Rahmen eines diskontinuierlichen Herstellungsverfahrens durchgeführt. Erfindungsgemäß besonders gut geeignete Verfahren sind Castingprozesse, Infusions- und Injektionsprozesse, Tauchung- und Tränkungsprozesse sowie Streichen, Drucken oder Spritzen.

### Katalytische Trimerisierung

Das erfindungsgemäße Verfahren zur Herstellung eines Polyisocyanuratkunststoffs D umfasst einen Verfahrensschritt, in dem das Polyisocyanatpolymer C durch katalytische Trimerisierung über einen Zeitraum von höchstens 48 Stunden, bevorzugt höchstens 24 Stunden, stärker bevorzugt höchstens 300 Minuten und ganz besonders bevorzugt höchstens 60 Minuten, bei einer Temperatur von wenigstens 100°C, bevorzugt wenigstens 120 °C, besonders bevorzugt wenigstens 140 °C und ganz besonders bevorzugt wenigstens 160 °C zum Polyisocyanuratkunststoff D umgesetzt wird.

In einer bevorzugten Ausführungsform wird das Polyisocyanatpolymer C nach Abschluss der katalytischen Polymerisation als Zwischenprodukt isoliert. Wobei isoliert im Sinne der Erfindung bedeutet, dass Zwischenprodukt nicht an dem Ort, an dem es hergestellt wurde, zum Polyisocyanuratkunstoff D umgesetzt wird. Zwischen dem Ort, an dem die katalytische Polymerisation durchgeführt wird, und dem Ort, an dem die katalytische Trimerisierung durchgeführt wird, liegen bevorzugt wenigstens 10 m, stärker bevorzugt wenigstens 50 m, noch stärker bevorzugt wenigstens 500 m und am stärksten bevorzugt wenigstens 1.000 m.

In einer anderen bevorzugten Ausführungsform kann die Herstellung des Polyisocyanuratkunststoffs D durch katalytische Trimerisierung auch in situ aus dem durch katalytische Polymerisation erhaltenen Polyisocyanatpolymer C, d.h. direkt im Anschluss an die katalytische Polymerisation, erfolgen. Der Übergang von der katalytischen Polymerisation zur katalytischen Trimerisierung wird dabei durch eine Temperaturerhöhung um wenigstens 20 °C ausgelöst.

Ein besonderer Vorteil des erfindungsgemäßen zweistufigen Verfahrens besteht darin, dass das Polyisocyanatpolymer C über Tage oder Wochen lagerstabil ist, wenn die Umgebungstemperatur bei höchstens 60 °C, bevorzugt höchstens 40 °C, besonders bevorzugt höchstens 30 °C und ganz besonders bevorzugt höchstens 25 °C liegt.

In einer besonders bevorzugten Ausführungsform der vorliegenden Erfindung liegt zwischen der katalytischen Polymerisation und der katalytischen Trimerisierung ein Abstand von 12 Stunden bis 1 Jahr, bevorzugt von 2 Tagen bis 6 Monaten, stärker bevorzugt von 3 Tagen bis 3 Monaten und insbesondere von mindestens 7 Tagen bis 2 Monaten, in denen das Präpolymer C bei Temperaturen von höchstens 30 °C, bevorzugt höchstens 20 °C gelagert wird. Eine kurzfristige Überschreitung der vorgenannten Lagertemperaturen ist solange unschädlich, wie die Kombination aus Ausmaß und Dauer der Temperaturerhöhung nicht zu einer katalytischen Trimerisierung von mehr als 10 % der im Polyisocyanatpolymer C vorhandenen freien oder reversibel geblockten Isocyanatgruppen führt bzw. sich der Tg des Polyisocyanatpolymers C um nicht mehr als 20 °C erhöht. Eine "Lagerung" im Sinne dieser Patentanmeldung schließt eine Ortsveränderung, d.h. einen Transport, ein.

Als besonders praxisgerecht hat es sich erwiesen, die katalytische Trimerisierung durch Erwärmen des Polyisocyanatpolymers C auf Temperaturen von wenigstens 100 °C, vorzugsweise über 120 °C, besonders bevorzugt über 140 °C und insbesondere bevorzugt über 160 °C zu starten. Diese Temperatur darf aber nicht über der Zersetzungstemperatur des Polyisocyanatpolymers C oder des Polyisocyanuratkunststoffs D liegen. Deswegen überschreitet die Temperatur des Werkstoffs während der katalytischen Trimerisierung nicht eine Temperatur von 400 °C, vorzugsweise 300 °C, besonders bevorzugt 280 °C.

Als besonders praxisgerecht hat es sich erwiesen, die katalytische Trimerisierung durch Erwärmen des Polyisocyanatpolymers C auf Temperaturen durchzuführen, die über der Glasübergangstemperatur des zu bildenden Polyisocyanurates D liegen. Anders ausgedrückt wird die Trimerisierung durchgeführt bei Temperaturen, die mindestens der Glasübergangstemperatur des vollausgehärteten Polyisocyanuratkunststoffs D entsprechen, bevorzugt bei einer Temperatur von wenigstens 10 °C, stärker bevorzugt wenigstens 30 °C und insbesondere wenigstens 60 °C oberhalb der Glasübergangstemperatur des Polyisocyanuratkunststoffs D. Hierbei werden die oben genannten Temperaturobergrenzen eingehalten. Der Tg des vollausgehärteten Polyisocyanatkunststoffs kann zweckgemäß aus dem zweiten Aufheizzyklus der DSC Messung abgelesen werden, bevorzugt bei einem Temperaturprogramm von 20 °C bis 250 °C bei einer Heizrate von 20 °C / Minute und einer Abkühlrate von 50 °C / Minute, da hier typischerweise der Tg des vollausgehärteten Polyisocyanuratkunstoffes D sichtbar wird.

Gemäß einer bevorzugten Ausführungsform der Erfindung erfolgt die katalytische Trimerisierung im ohne vorherige Deaktivierung des Katalysators B1. Insbesondere findet erfindungsgemäß die katalytische Trimerisierung in Gegenwart des Katalysator B1 und des Katalysators B2 statt.

Gemäß einer anderen bevorzugten Ausführungsform der Erfindung erfolgt die katalytische Trimerisierung nach Deaktivierung, vorzugsweise durch Oxidation des Katalysators B1.

Die Trimerisierungsreaktion des Polyisocyanatpolymers C zum Polyisocyanuratkunststoff D wird bevorzugt solange fortgesetzt, bis mindestens 80 %, vorzugsweise mindestens 90 %, besonders bevorzugt mindestens 95 % der ursprünglich in der Polyisocyanatzusammensetzung A vorhandenen freien Isocyanatgruppen abreagiert haben. Anders ausgedrückt sind in dem erfindungsgemäßen Polyisocyanuratkunststoff D vorzugsweise nur noch höchstens 20 %, höchstens 10 %, besonders bevorzugt höchstens 5 % der ursprünglich in der Polyisocyanatzusammensetzung A enthaltenen Isocyanat- gruppen vorhanden. Der Prozentsatz an noch vorhandenen Isocyanat- Gruppen kann durch einen Vergleich des Gehalts an Isocyanat-Gruppen in der ursprünglichen Polyisocyanatzusammensetzung A mit dem Gehalt an Isocyanat-. Gruppen im Reaktionsprodukt, beispielsweise durch vorgenannten Vergleich der Peakmaxima der Isocyanatbande bei ca. 2270 cm⁻¹ mittels ATR-Spektroskopie, bestimmt werden.

Die Trimerisierungsreaktion des Polyisocyanatpolymers C zum Polyisocyanuratkunststoff D in Schritt c) wird außerdem bevorzugt solange fortgesetzt, bis wenigstens 20 Gew.-%, bevorzugt wenigstens 400 Gew.-% und besonders bevorzugt wenigstens 50 Gew.-% der bei der katalytischen Polymerisation gebildeten Uretdiongruppen zu Polyisocyanuratgruppen umgesetzt sind. Der Prozentsatz an noch vorhandenen Uretdiongruppen kann durch einen Vergleich des Gehalts an Uretdiongruppen in der ursprünglichen Polyisocyanatpolymer C mit dem Gehalt an Uretdiongruppen im Reaktionsprodukt D, beispielsweise durch vorgenannten Vergleich der normierten Peakmaxima der Uretdionbande bei ca. 1765 cm⁻¹ mittels ATR Spektroskopie, bestimmt werden.

Es ist bekannt, dass die Peakhöhen im ATR Spektrum keine absoluten Werte von Konzentrationen liefern, sie liefern aber gut reproduzierbare Werte, die mit absoluten Konzentrationen bei Bedarf korreliert werden können.

Die Veränderung der "Isocyanuratkonzentration", "Isocyanatkonzentration" und "Uretdionkonzentration" werden dazu im ATR Spektrum gegen die CH Schwingungen bei 2700-3100 normiert bestimmt wobei die Peakhöhe des Peakmaximums der Absorptionsbande der jeweiligen funktionelle Gruppe (Isocyanurat, Isocyanat, Uretdion) in der Verbindung C jeweils = 1 gesetzt wird.

In einer bevorzugten Ausführungsform hat der Polyisocyanuratkunststoff D eine normierte Peakhöhe des Maximum der Isocyananuratbande von D > C bevorzugt > 1,05 ^{∗} C, besonders bevorzugt > 1,1 ^{∗} C und ganz besonders bevorzugt > 1,2 ^{∗} C eine Peakhöhe des Maximum der Uretdionbande von D < C, bevorzugt < 0,8 ^{∗} C, besonders bevorzugt < 0,6 ^{∗} C und ganz besonders bevorzugt < 0,5 ^{∗} C und eine Peakhöhe des Maximum der Isocyanatbande von D < C, bevorzugt < 0,9 ^{∗} C, besonders bevorzugt < 0,5 ^{∗} C und ganz besonders bevorzugt < 0,3 ^{∗} C.

Das Ergebnis der Trimerisierungsreaktion von C ist bevorzugt ein Produkt mit einem Isocyanuratgehalt bezogen auf den Anteil an polymerisierbaren Bestandteilen in der Ausgangszusammensetzung A von wenigstens 10 Gew.-%, bevorzugt wenigstens 15 Gew.-%, besonders bevorzugt wenigstens 20 Gew.-%.

In einer bevorzugten Ausführungsform wird die Trimerisierungsreaktion des Polyisocyanatpolymers C zum Polyisocyanuratkunststoff D solange fortgesetzt, dass auch bei einer anschließenden Temperung für eine Stunde bei einer Temperatur, die um 20 °C über der Trimerisierungstemperatur liegt, sich der Tg des Polyisocyanuratkunststoffes um nicht mehr als 15 °C, bevorzugt nicht mehr als 10 °C und besonders bevorzugt nicht mehr als 5 °C ändert.

Aus Gründen der Effizienz hat es sich als besonders wünschenswert erwiesen, die katalytische Trimerisierung in einem möglichst kurzen Zeitraum durchzuführen. Bevorzugt ist daher, die Trimerisierung unter Anpassung der Reaktionstemperatur innerhalb des oben formulierten Bereiches in maximal 60 min, bevorzugt in maximal 30 min, stärker bevorzugt in maximal 10 min und insbesondere in maximal 5 min abzuschließen. Am besten wird die katalytische Trimerisierung des Polyisocyanatpolymers C in maximal 2 min abgeschlossen.

Da die Isocyanuratbildung in Abhängigkeit vom verwendeten Katalysator häufig von Nebenreaktionen, beispielsweise der Dimerisierung und Weiterreaktion zu Carbodiimidstrukturen oder der Trimerisierung unter Bildung von Iminoxadiazindionen (sogenannten asymmetrischen Trimerisaten) und bei Vorhandensein von Urethangruppen im Ausgangspolyisocyanat von Allophanatisierungsreaktionen, begleitet wird, soll im Rahmen der vorliegenden Erfindung der Begriff "katalytische Trimerisierung" synonym auch für diese zusätzlich ablaufenden Reaktionen stehen.

Gemäß einer besonderen Ausführungsform bedeutet "katalytische Trimerisierung" jedoch, dass vorwiegend Cyclotrimerisierungen von mindestens 50 %, vorzugsweise mindestens 60 %, besonders bevorzugt mindestens 70 %, insbesondere mindestens 80 %, der in der Polyisocyanatzusammensetzung A zu Beginn dieses Verfahrensschrittes vorliegenden Isocyanatgruppen am Ende der katalytischen Trimerisierung zu Isocyanuratstruktureinheiten katalysiert werden. Nebenreaktionen, insbesondere solche zu Carbodiimid-, Uretdion-, Allophanat-, und/oder Iminooxadiazindionstrukturen treten jedoch üblicherweise auf und können sogar gezielt genutzt werden, um z.B. den Tg-Wert des erhaltenen Polyisocyanuratkunststoffs vorteilhaft zu beeinflussen.

### Polyisocyanuratkunststoff D

Das Produkt der katalytischen Trimerisierung ist der Polyisocyanuratkunststoff D mit einer Glasübergangstemperatur, die wenigstens 10°C, bevorzugt wenigstens 25°C, besonders bevorzugt wenigstens 40°C und ganz besonders bevorzugt wenigstens 50°C über der des Polyisocyanatpolymers C liegt. Die absolute Glasübergangstemperatur des Isocyanuratkunstoffs D liegt dabei vorzugsweise zwischen 60 und 400 °C, bevorzugt zwischen 90 und 300 °C und besonders bevorzugt zwischen 100 und 280 °C. Die Glasübergangstemperatur wird über DSC im ersten Aufheizzyklus bestimmt.

Ein erfindungsgemäßer Polyisocyanuratkunststoff D ist ein Kunststoff, der zu einem Anteil von wenigstens 10 Gew.-%, bevorzugt wenigstens 15 Gew.-% und ganz besonders bevorzugt wenigstens 20 Gew.-% Polyisocyanuratgruppen enthält, bezogen auf den Anteil an polymerisierbaren Bestandteilen in der Ausgangszusammensetzung A. Blends aus Polyisocyanuraten und anderen Kunststoffen fallen ebenfalls unter den Begriff "Polyisocyanuratkunststoff", wenn Sie die genannten Mengen an Gewichtsprozent Polyisocyanurat enthalten und nach dem erfindungsgemäßen Verfahren produziert wurden.

Wenn hier von "Kunststoff" die Rede ist, so ist damit ein Produkt gemeint, welches bei Raumtemperatur - im Gegensatz zu beispielsweise Gelen oder Flüssigkeiten - weitestgehend formbeständig ist. Der Begriff "Kunststoff", wie hier verwendet, umfasst alle üblichen Kunststoffklassen, d.h. insbesondere auch Duroplaste, Thermoplaste und Elastomere.

Ein "Polyisocyanuratkunststoff", wie hier verwendet, ist jedes Molekül, vorzugsweise ein Polymer, welches eine Pluralität an Isocyanuratstruktureinheiten, beispielsweise mindestens 10 Isocyanuratstruktureinheiten, aufweist. Ein Molekül mit einer einzigen Isocyanuratstruktureinheit kann als "Isocyanurat" bezeichnet werden.

Die charakteristische, zyklische Isocyanuratstruktureinheit ist in folgender Strukturformel wiedergegeben:

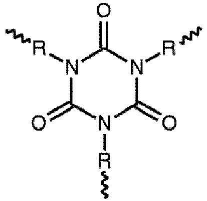

Mit dem erfindungsgemäßen Verfahren lassen sich sehr effizient homogene, blasenfreie Volumenkörper aus Polyisocyanuratkunststoff erhalten. Die Blasenfreiheit eines Volumenkörpers kann über die Dichte spezifiziert werden. Die erfindungsgemäßen Volumenkörper aus Polyisocyanuratkunststoff zeichnen sich insbesondere durch eine Dichte von größer 1,00 g/cm³ bestimmt nach DIN EN ISO 1183-1 aus. Das erfindungsgemäße Verfahren liefert insbesondere Volumenkörper mit einer Dichte von größer 1,10 g/cm³, bevorzugt größer 1,15 g/cm³.

### Verbundwerkstoffe

In einer bevorzugten Ausführungsform der vorliegenden Erfindung enthält das zur Herstellung des Polyisocyanatpolymers C bereitgestellte Reaktionsgemisch zusätzlich wenigstens einen faserförmigen Füllstoff F.

Diese Füllstoffe F werden vorzugsweise in Mengen von mindestens 1 Vol.-%, bevorzugt mindestens 5 Vol.-%, besonders bevorzugt mindestens 15 Vol.-%, ganz besonders bevorzugt mindestens 25 Vol.-%, insbesondere mindestens 35 Vol.-%, berechnet als Gesamtvolumen an eingesetzten Füllstoffen F bezogen auf das Gesamtvolumen des Polyisocyanatpolymers C (bzw. des Polyisocyanuratkunststoffs D), eingesetzt. Wenn ein Füllstoff F zugesetzt wird, beträgt seine Menge aber höchstens 90 Vol.-% bezogen auf das Gesamtvolumen des Polyisocyanatpolymers C (bzw. des Polyisocyanuratkunststoffs D).

Faserförmige Füllstoffe F können aus organischen oder anorganischen Fasern bestehen. Erfindungsgemäß geeignete anorganische Fasern sind Glasfasern, Basaltfasern, Borfasern, Keramikfasern, Whisker, Kieselsäurefasern sowie metallische Verstärkungsfasern. Erfindungsgemäß geeignete organische Fasern sind Aramidfasern, Kohlenstofffasern, Polyesterfasern, Nylonfasern sowie Plexiglasfasern. Erfindungsgemäß geeignete Naturfasern sind Flachsfasern, Hanffasern, Holzfasern, Baumwollfasern, Cellulosefasern sowie Sisalfasern.

Gemäß einer bevorzugten Ausführungsform der Erfindung wird ein faserförmige Füllstoff F ausgewählt aus der Gruppe bestehend aus Glasfasern, Aramidfasern, Basaltfasern, Kohlenstofffasern und deren Mischungen eingesetzt. Gemäß einer besonders bevorzugten Ausführungsform der Erfindung werden als faserförmige Füllstoffe Glasfasern und/ oder Kohlenstofffasern, insbesondere Glasfasern eingesetzt.

### Halbzeug

In einer weiteren Ausführungsform betrifft die vorliegende Erfindung ein Verfahren zur Herstellung eines Halbzeugs, enthaltend die Schritte
a) Bereitstellen eines Reaktionsgemisches mit einem molaren Verhältnis von Isocyanatgruppen zu mit Isocyanat reaktiven Gruppen von wenigstens 3 : 1, enthaltend
   (i) eine Polyisocyanatzusammensetzung A,
   (ii) einen Katalysator B1, der die Reaktion von Isocyanatgruppen zu Uretdiongruppen katalysiert, und
   (iii) einen Katalysator B2, der die Reaktion von Isocyanat- und Uretdiongruppen zu Isocyanuratgruppen katalysiert, wobei Katalysator B1 verschieden von Katalysator B2 ist;
b) Benetzen einer Faser, eines Gewebes, eines Geleges oder eines Gewirkes mit dem in Verfahrensschritt a) bereitgestellten Reaktionsgemisch; und
c) katalytische Polymerisation der Polyisocyanatzusammensetzung A zu einem Polyisocyanatpolymer C, welches eine Schicht auf der Faser, dem Gewebe, dem Gelege oder dem Gewirke bildet und gekennzeichnet ist durch
   (i) die Anwesenheit von Uretdiongruppen; und
   (ii) ein Modul G' des Polyisocyanatpolymer C bestimmt durch ein Platte/Platte-Rheometer gemäß ISO 6721-10:2015-09 bei 1/s bei 23°C von ≥ 1^{∗}10⁶ Pa;
      wobei die katalytische Polymerisation bei einer Durchschnittstemperatur von höchstens 100 °C über einen Zeitraum von 30 min bis zu 14 Tagen geführt wird.

Alle weiter oben in dieser Anmeldung für die Zusammensetzung des Reaktionsgemisches, seine einzelnen Komponenten und die katalytische Polymerisation gegebenen Definitionen gelten auch für diese Ausführungsformen.

Zur Herstellung des Gewebes, Geleges oder Gewirkes geeignete Fasern sind die, die bereits oben in Zusammenhang mit dem faserförmigen Füllstoff F beschrieben wurden.

Das Benetzen einer Faser, eines Gewebes, eines Geleges oder eines Gewirkes mit dem Reaktionsgemisch kann mit allen dem Fachmann bekannten Verfahren erfolgen.

In einem weiteren Verfahrensschritt der katalytischen Trimerisierung kann das in Verfahrensschritt c) erhaltene Halbzeug in derselben Weise weiterverarbeitet werden wie das oben definierte Isocyanatpolymer C. Vor der katalytischen Trimerisierung kann das erfindungsgemäße Halbzeug in derselben Weise gelagert oder umgeformt werden wie das Polyisocyanatpolymer C.

Weiterhin betrifft die vorliegende ein Halbzeug, erhältlich durch das oben definierte Verfahren.

Gegenüber den bekannten Systemen auf Basis von Epoxiden oder Vinylestern haben die erfindungsgemäßen Halbzeuge den Vorteil, dass sie nicht bei Temperaturen unter dem Gefrierpunkt gelagert werden müssen, sondern bei den weiter oben in dieser Anmeldung definierten Lagertemperaturen für mehre Tage oder sogar Monate stabil sind.

### Beispiele

### Allgemeine Angaben:

Alle Prozentangaben beziehen sich, sofern nicht abweichend angegeben, auf Gewichtsprozent (Gew.-%).

Die zur Zeit der Versuchsdurchführung herrschende Umgebungstemperatur von 23 °C wird als RT (Raumtemperatur) bezeichnet.

Die NCO- Funktionalität der verschiedenen Rohstoffe wurde titriert oder aus dem jeweiligen Datenblatt des Rohstoffs entnommen.

### Messmethoden:

Die nachstehend aufgeführten Methoden zur Bestimmung der entsprechenden Parameter wurden zur Durchführung bzw. Auswertung der Beispiele angewendet und sind auch die Methoden zur Bestimmung der erfindungsgemäß relevanten Parameter im Allgemeinen.

### Bestimmung der Viskosität, Speichermodul:

Die komplexe Viskosität und der G' einer kleinen Menge des reaktiven Harzmaterials einschließlich des zugegebenen Katalysators wurde bei 23 °C mit einem Platte/Platte-Rheometer gemäß ISO 6721-10:2015-09 bei einer Frequenz von 1/s gemessen.

Die Topfzeit ist die Zeit, in der sich die Anfangsviskosität der Probe, definiert als die Viskosität nach Beendigung des Mischvorgangs, verdreifacht hat.

Der Mischvorgang dauert in der Regel zwischen 30 Sekunden und 10 Minuten.

### Bestimmung der NCO-Konzentration:

Die Bestimmung der NCO-Gehalte erfolgte titrimetrisch nach DIN EN ISO 11909.

### ATR-IR Messungen:

Für die Messung der freien NCO-Gruppen, der Uretdiongruppen und der Isocyanuratgruppen wurde ein FT-IR-Spektrometer (*Tensor II*) der Fa. *Bruker* eingesetzt. Der Probenfilm wurde auf die Platinum-ATR-Einheit kontaktiert. Die kontaktierte Fläche der Probe ist 2 x 2 mm. Bei der Messung dringt die IR-Strahlung je nach Wellenzahl 3- 4 µm in die Probe ein. Von der Probe wurde dann ein Absorptionsspektrum erstellt. Um eine ungleichmäßige Kontaktierung der unterschiedlichen harten Proben zu kompensieren, wurde an allen Spektren eine Grundlinienkorrektur und eine Normierung im Wellenzahlbereich 2700-3100 cm⁻¹ (CH2, CH3) durchgeführt.

Die Peak Intensität des Signals der NCO-Gruppe wurde bei ca. 2264 cm⁻¹ bestimmt.

Die Peak Intensität des Signals der Uretdion-Gruppe wurde bei ca. 1765 cm⁻¹ bestimmt.

Die Peak Intensität des Signals der Isocyanurat-Gruppe wurde bei ca. 1674 cm⁻¹ bestimmt.

### Bestimmung der Monomer-Konzentration:

Die Bestimmung der Monomer-Gehalte und extrahierbarer Bestandteile erfolgte mittels Gaschromatographen aus den mit Aceton für 7 Tage bei 23°C extrahierten Proben gegen Hexamethylendiisocyanat als Standard.

### DSC Analyse:

Die DSC Messungen und die Glasübergangstemperatur Tg wurde mittels DSC (Differential Scanning Calorimetrie) mit einem Mettler DSC 12E (Mettler Toledo GmbH, Giessen, DE) bei einer Aufheizgeschwindigkeit von 20 °C/min bestimmt. Der Temperaturbereich wurde von -20 °C bis 250 °C gewählt.

Der Tg der erfindungsgemäßen Polyisocyanuratpolymere nach vollständiger Aushärtung wurde bei einer Aufheizgeschwindigkeit von 20°C / Minute von 20°C bis 250°C und einer Abkühlgeschwindigkeit von 50°C / Minute von 250°C bis 20°C im zweiten Aufheizzyklus bestimmt. Eine vollständige Aushärtung wird dann angenommen, wenn sich der Tg zwischen aufeinanderfolgenden Aufheizzyklen nicht um mehr als 5°C verändert.

### Reaktionstemperatur:

Die Reaktionstemperatur wurde mit zwei Methoden bestimmt.

Für diskontinuierliche stichprobenartige Temperaturmessungen im Bereich 20-250°C wurde das IR-Thermometer "Testo 845" verwendet.

Für kontinuierliche Temperaturmessungen im Bereich 20-250°C wurde der Temperaturlogger Testo 735-2 mit Thermoelement K verwendet.

Die Art der Messmethode wird jeweils in den Versuchen angegeben.

### Ausgangsverbindungen:

Isocyanat 1: Isocyanat 1 ist ein Isocyanurat, welches auf 1,6- Hexamethylendiisocyanat (HDI) basiert und analog Beispiel 11 der Anmeldung EP-A 330 966 hergestellt wurde, mit der Abweichung, dass anstelle 2-Ethylhexanol 2-Ethyl-1,3-hexandiol als Katalysatorlösemittel eingesetzt wurde.

| | |
|---|---|
| NCO-Gehalt: | 22,9 Gew.-% |
| NCO-Funktionalität: | 3,2 |
| HDI Monomergehalt: | 0,1 Gew.-% |
| Viskosität (23°C): | 1200 mPas (DIN EN ISO 3219/A.3) |

Isocyanat 2:
Isocyanat 2 ist ein Gemisch von 2 Isocyanuraten und wurde in 2 Schritten hergestellt.
Schritt 1: Zunächst wurde Isophorondiisocyanat (IPDI)_trimerisiert analog Beispiel 2 der Anmeldung EP-A-0 003 765 bis ein NCO-Gehalt von 31,1 Gew.-% erreicht war. Der Überschuss IPDI wurde mittels Dünnschichtdestillation bei 170 °C/ 0,1 mbar entfernt und nach Abkühlung ein fast farbloses Polyisocyanurat mit folgenden Eigenschaften erhalten:

| | |
|---|---|
| NCO-Gehalt: | 16,4 Gew.-% |
| NCO-Funktionalität: | 3,3 |
| Schmelzpunkt: | 100 -110 °C |
| IPDI Monomergehalt: | 0,2 Gew.-% |

Schritt 2: Das erhaltene feste Trimer wurde anschließend grob zerkleinert und zusammen mit Isocyanat 1 in ein Reaktionsgefäß bei Raumtemperatur unter Stickstoffatmosphäre gegeben. Die Mischung wurde unter Rühren auf 100 bis 140 °C erhitzt, so dass sich der Feststoff löste und eine fast klare Lösung erhalten wurde, die nach Abkühlung auf 50 °C durch einen 200 micron Filter filtriert wurde. Die eingesetzten Mengen wurden so gewählt, dass etwa ein NCO-Gesamtgehalt von ca 21 Gew.-% erreicht wird.

| | |
|---|---|
| NCO-Gehalt: | 21,0 Gew.-% |
| NCO-Funktionalität: | 3,2 |
| HDI Monomergehalt: | 0,07 Gew.-% |
| IPDI Monomergehalt: | 0,06 Gew.-% |
| Viskosität (23°C): | 22500 mPas (DIN EN ISO 3219/A.3) |

Das Trennpapier Typ release liner whG02J1(88wGLrh)G00J1 wurde von der Fa. Mondi bezogen.

Das Glasfasergewebe Typ 92105 ITG_027, EC9-68 tex mit 163 g / m² wurde von der Fa. P-D INTERGLAS TECHNOLOGIES GmbH bezogen.

Polyethylenglycol 400 wurde mit einer Reinheit von > 99 Gew.-% von der Fa. ACROS bezogen.

Kaliumacetat wurde mit einer Reinheit von > 99 Gew.-% von der Fa. ACROS bezogen.

Kronenether 18-Krone-6 zur Synthese wurde von Merck bezogen und eingesetzt wie erhalten.

N,N,N'-Trimethylaminoethyl-ethanolamin mit einer OH-Zahl von 384 mg KOH/g wurde von der Firma Huntsman Corporation bezogen.
Katalysator B1:
   Trioctylphosphin wurde mit einer Reinheit von > 90 Gew.-% von der Fa. Sigma-Aldrich bezogen.
Katalysator B2a:
   Kaliumacetat (50,0 g) wurde in dem PEG 400 (950,0 g) bei 23°C unter Schutzgas-Atmosphäre solange gerührt, bis es vollständig gelöst war. Es wurde so eine 5 Gew.-% Lösung von Kaliumacetat in PEG 400 erhalten und ohne weitere Behandlung als Katalysator eingesetzt.
Katalysator B2b: Kaliumacetat 0,177g, Kronenether 18-Krone-6 0,475g wurden in Diethylenglykol 3,115 g bei 23°C unter Schutzgas-Atmosphäre gerührt bis das Kaliumacetat vollständig gelöst war.
Katalysator B2c: Zu N,N,N'-Trimethylaminoethyl-ethanolamin 14,6 g wurde Isocyanat 1 18,3 unter Kühlung getropft und solange gerührt, bis die Mischung homogen war und kein Rest Isocyanat durch IR-Analytik nachweisbar ist.

### Die Katalysatoren wurden, wenn nicht anders beschrieben unter Stickstoff gelagert

Die eingesetzten Rohstoffe wurden, wenn nicht anders beschrieben vor Einsatz für mindestens 12 h bei < 100 mbar Vakuum unter Rühren entgast.

Erfindungsgemäße Versuche sind zusätzlich durch^{∗} gekennzeichnet.

### Ausführungsbeispiel 1^{∗}

Isocyanat 1 (96,0 g), B1 (2,0 g) und B2a (2,0 g) wurden bei Raumtemperatur mittels eines Speed-Mixers DAC 400.1 FVZ (Firma Hauschild, DE) in einem 200 ml Becher für eine Minute bei 2000 Umdrehungen pro Minute innig gemischt.

Die Reaktionsmischung wurde für 12 h bei 23°C im Mischbecher stehen gelassen und reagierte zu einem trockenen harten Feststoff. Die Temperatur der Reaktionsmischung verblieb bei Messungen im Takt von jeweils einer Stunde innerhalb der ersten 6h mittels IR Thermometer unterhalb von 60°C. Der Feststoff wurde nach 3 Tagen mittels DSC Messung untersucht. Dabei zeigte die erste Aufheizung eine erste breite Glasübergangstemperatur (Tg) bei ca. 52 °C. Bei der zweiten und dritten Aufheizung wurde eine Tg bei 106 °C bzw. 110 °C gefunden. Die vollständige Aushärtung wurde somit in der DSC vollzogen.

### Ausführungsbeispiel 2^{∗}

Isocyanat 1 (96,0 g), B1 (2,0 g) und B2a (2,0 g) wurden in einem 200 ml Becher bei Raumtemperatur mittels eines Speed-Mixers DAC 400.1 FVZ (Firma Hauschild, DE) für eine Minute bei 2000 Umdrehungen pro Minute innig gemischt.

Die Reaktionsmischung wurde für 6 h bei 23°C im Mischbecher stehen gelassen und reagierte zu einem trockenen gummiartigem Feststoff. Die Temperatur der Reaktionsmischung verblieb bei Messungen im Takt von jeweils einer Stunde mittels IR Thermometer unterhalb von 60°C. Ein Teil des erhaltenen Feststoffs (ca. 10,0 g) wurde aus dem Mischbecher mittels Bandsäge entfernt und wurde im Ofen bei 190 °C für 30 min erwärmt. Nach dem Ofen wurde ein ausgehärteter Polyisocyanuratkunststoff mit einer Tg von 107°C erhalten.

### Ausführungsbeispiel 3^{∗}

Isocyanat 1 (97,5 g), B1 (2,0 g) und B2a (0,5 g) wurden in einem 200 ml Becher bei Raumtemperatur mittels eines Speed-Mixers DAC 400.1 FVZ (Firma Hauschild, DE) für eine Minute bei 2000 Umdrehungen pro Minute innig gemischt.

Die Reaktionsmischung wurde für 24 h bei 23°C im Mischbecher stehen gelassen und reagierte zu einem trockenen harten Feststoff. Die Temperatur der Reaktionsmischung verblieb bei Messungen im Takt von jeweils einer Stunde innerhalb der ersten 6h mittels IR Thermometer unterhalb von 60°C.

Ein Teil des erhaltenen Feststoffs (ca. 10,0 g) wurde aus dem Mischbecher mittels Bandsäge entfernt und wurde im Ofen bei 190 °C für 30 min erwärmt. Nach dem Ofen wurde ein ausgehärteter Polyisocyanuratkunststoff mit einer Tg von 102°C erhalten.

### Ausführungsbeispiel 4^{∗}

Isocyanat 1 (97,5 g), B1 (0,5 g) und B2a (2,0 g) wurden bei Raumtemperatur in einem 200 ml Becher mittels eines Speed-Mixers DAC 400.1 FVZ (Firma Hauschild, DE) für eine Minute bei 2000 Umdrehungen pro Minute innig gemischt.

Die Reaktionsmischung wurde für 24 h bei 23°C im Mischbecher stehen gelassen und reagierte zu einem trockenen gummiartigen Feststoff. Die Temperatur der Reaktionsmischung verblieb bei Messungen im Takt von jeweils einer Stunde innerhalb der ersten 6h mittels IR Thermometer unterhalb von 50°C.

Ein Teil des erhaltenen Feststoffs (ca. 10,0 g) wurde aus dem Mischbecher mittels Bandsäge entfernt und wurde im Ofen bei 190 °C für 30 min erwärmt. Nach dem Ofen wurde ein ausgehärteter Polyisocyanuratkunststoff mit einer Tg von 108°C erhalten.

### Ausführungsbeispiel 5^{∗}

Es wurde ein Pre-Preg unter Verwendung einer EHA Pre-Preg Laboranlage (Fa. EHA Composite Machinery GmbH) hergestellt. Dazu wurde Isocyanat 2 (725,0 g) mit B1 (10,2 g) und B2a (14,5 g) bei 23°C mittels eines Rührers unter weitgehender Vermeidung von Blasen vermischt. Anschließend wurde die reaktive Harzmischung auf ein Trennpapier (release liner whG02J1(88wGLrh)G00J1 der Fa. Mondi) als dünner Film mit ca. 0,06 mm Dicke aufgezogen und das Glasfasertextil (Typ 92105 ITG_027, EC9-68 tex der Fa. P-D INTERGLAS TECHNOLOGIES GmbH; 163 g/ m2) auf das mit Reaktionsmischung beschichtete Trennpapier mittels verschiedener Rollen aufgepresst und so getränkt. Die Abzugsgeschwindigkeit betrug 2 m / min. Das so hergestellte Pre-Preg wurde aufgerollt und in einer Aluminiumverpackung eingeschweisst, dann zunächst 6 h bei Raumtemperatur und anschliessend bei -20 °C gelagert.

Nach 32 Tagen wurde ein Teil des Pre-Pregs untersucht. Dazu wurde der Teil des Pre-Preg auf Raumtemperatur aklimatisiert und ausgepackt. Das Pre-Preg hatte eine trockene elastische, gummiartige Konsistenz.

Die ATR Messung zeigte eine Abnahme an freien Isocyanatgruppen und eine Zunahme an Uretdiongruppen. Es wurden 4 Lagen übereinander je 90 ° versetzt gelegt und in einer Heizpresse bei 200 °C 10 min verpresst. Es entstand eine kompakte, harte Platte, deren Lagen per Hand nicht getrennt werden konnten. Die DSC ergab einen Tg von 103°C. Erneut wurden an dem fertigen Isocyanuratkuststoff ATR Messungen durchgeführt, die keine Signale mehr für das Vorhandensein von freien Isocyanatgruppen oder Uretdiongruppen zeigten. Analog wurde eine zweite Untersuchung des Pre-Pregs nach 192 Tagen durchgeführt, die zu den gleichen Ergebnissen führte.

### Beispiele 6 bis 10, erfindungsgemäße Versuche sind durch^{∗} gekennzeichnet.

Nach dem in Beispiel 1 beschriebenen Verfahren wurden jeweils 100 g des Ausgangspolyisocyanates 1 mit unterschiedlichen Mengen von B1 und B2b gemischt und zwischen zwei in einem Abstand von 2mm mit einer Silikonschnur abgedichteten Glassplatten gegossen und zu Polyisocyanuratkunststoffen bei den angegebenen Temperaturen und Zeiten trimerisiert. Die nachfolgende Tabelle 1: zeigt die Zusammensetzungen der Reaktionsgemische, Reaktionsbedingungen und charakteristische Eigenschaften der ausgehärteten Produkte:

**Tabelle 1**

| **Beispiel** | **6** | **7*** | **8** | **9*** | **10** |
|---|---|---|---|---|---|
| Ausgangspolyisocyanat | 1 | 1 | 1 | 1 | 1 |
| B1 (Gew-%) | 1 | 1 | 0,5 | 0,5 | - |
| B2b (Gew.%) | 0,5 | 0,5 | - | 3 | 3 |
| Temperatur/°C; Zeit/d | 23/28 | 23/26 | 23/26 | 23/26 | - |
| Temperatur/°C;Zeit/min | - | 120/920 | 150/30 | 180/30 | 180/30 |
| Isocyanurat/Uretdion/ISO* | 14,7 | 15,2 | 14,8 | 16,4 | 16,8 |
| | 2,3 | 0,1 | 1,3 | 0,1 | 0 |
| | 2,1 | 0,9 | 2,5 | 0,1 | 0 |
| Tg | 55 | 104 | 44 | 106 | 110 |

| | | | | | |
|---|---|---|---|---|---|
| *ATR-IR: Peakhöhe nach Normierung auf CH Schwingungen und Basislinienkorrektur | | | | | |

### Vergleichsbeispiel 11

Isocyanat 1 (98,0 g) und B2a (2,0 g) wurden bei Raumtemperatur mittels eines Speed-Mixers DAC 400.1 FVZ (Firma Hauschild, DE) für eine Minute bei 2000 Umdrehungen pro Minute innig gemischt. Nach 3 Tagen Lagerung bei 23°C im Mischbecher wurde immer noch eine klebrige Masse erhalten.

Ein Teil der Reaktionsmischung wurde aus dem Behälter entfernt (10,0 g) und wurde im Ofen bei 190 °C 30 min erwärmt. Die Behandlung ergab einen ausgehärteten Polyisocyanuratkunststoff mit einer Tg von 108 °C.

### Vergleichsbeispiel 12

Isocyanat 1 (98,0 g) und B1 (2,0 g) wurden bei Raumtemperatur mittels eines Speed-Mixers DAC 400.1 FVZ (Firma Hauschild, DE) für eine Minute bei 2000 Umdrehungen pro Minute innig gemischt. Die Reaktionsmischung wurde für 24 h 23°C im Mischbecher stehen gelassen und reagierte zu einem trockenen Feststoff.

Ein Teil des erhaltenen Feststoffs (10,0 g) wurde aus dem Mischbecher mittels Bandsäge entfernt und wurde im Ofen bei 190 °C für 30 min erwärmt. Nach dem Ofen wurde wieder eine an der Oberfläche klebrige Masse erhalten.

### Vergleichsbeispiel 13

Isocyanat 1 (99,5 g) und B1 (0,5 g) wurden bei Raumtemperatur mittels eines Speed-Mixers DAC 400.1 FVZ (Firma Hauschild, DE) für eine Minute bei 2000 Umdrehungen pro Minute innig gemischt. Die Reaktionsmischung wurde für 24 h 23°C im Mischbecher stehen gelassen und reagierte zu einem trockenen Feststoff.

Ein Teil des erhaltenen Feststoffs (10,0 g) wurde aus dem Mischbecher mittels Bandsäge entfernt und wurde im Ofen bei 190 °C für 60 min erwärmt. Nach dem Ofen wurde wieder eine an der Oberfläche klebrige Masse erhalten.

### Vergleichsbeispiel 14

Isocyanat 1 (20 g), B1 (0,5 Gew.%) und B2b (2 Gew.%) wurden bei Raumtemperatur mittels eines Speed-Mixers DAC 400.1 FVZ (Firma Hauschild, DE) für eine Minute bei 2000 Umdrehungen pro Minute innig gemischt. Nach 1 Tag Lagerung bei 23°C im Mischbecher wurde eine Masse mit einem Tg von 52°C erhalten.

### Ausführungsbeispiel 15^{∗}

Isocyanat 1 (20 g) B1 (1.5 Gew%) und B2c (1.13 Gew%) wurden bei Raumtemperatur mittels eines Speed-Mixers DAC 400.1 FVZ (Firma Hauschild, DE) für eine Minute bei 2000 Umdrehungen pro Minute innig gemischt.

Die Reaktionsmischung wurde für 24 h 23°C im Mischbecher stehen gelassen und reagierte zu einem trockenen Feststoff.

Ein Teil des erhaltenen Feststoffs (10,0 g) wurde aus dem Mischbecher mittels Bandsäge entfernt und wurde im Ofen bei 220 °C für 5 min erwärmt. Nach dem Ofen wurde ein Feststoff mit einem Tg von 93 °C erhalten.

Vergleichsbeispiel 11 zeigt deutlich, dass der Trimerisierungskatalysator B2 alleine bei Raumtemperatur praktisch nicht oder nur sehr wenig reaktiv ist. Andererseits zeigt der gleiche Katalysator B2 bei 190 °C eine sehr hohe Reaktivität und vernetzt das reaktive Harz innerhalb weniger Minuten vollständig zum Polyisocyanuratkunststoff. Demgegenüber zeigt Katalysator B1 bei Raumtemperatur eine deutliche Aktivität und polymerisiert die freien Isocyanatgruppen innerhalb weniger Stunden bis Tage in Abhängigkeit von der Konzentration (Vergleichsbeispiele 12, 13 und 14). Andererseits scheint die katalytische Aktivität von Katalysator B1 auch bei hohen Temperaturen nicht wesentlich anzusteigen und er ist nicht in der Lage das reaktive Harz zu einem Polyisocyanuratkunststoff vollständig zu vernetzen, es wird sogar die Rückbildung von Isocyanaten beobachtet, die sich per ATR nachweisen lassen, aber auch durch die Ausbildung einer klebrigen Schicht an der Oberfläche des Probenkörper ausdrücken. (Vergleichsbeispiele 12 und 13).

Ausführungsbeispiel 1 zeigt unter Verwendung von Katalysator B1 und Katalysator B2a deutlich, dass zunächst bei Umgebungstemperatur bei den eingesetzten Reaktionsmengen in dem verwendeten Reaktionsgefäß ein Polyisocyanatpolymer gebildet wird, welches einen Tg von etwa 40 °C bis 60 °C aufweist. Die Reaktionstemperatur hat dabei während der Reaktion 60°C nicht überschritten. Es wird auch gezeigt, dass bei weiterer Temperaturerhöhung auf 190°C die vorhandenen Uretdion- und freien Isocyanatgruppen weitgehend in Isocyanuratgruppen umgesetzt werden. Die Polyisocyanuratgruppen sind stabil und es wurde auch nach der 2ten oder 3ten Aufheizung im DSC keine signifikante Veränderung des Tg mehr beobachtet.

Ausführungsbeispiele 2,3 und 4 zeigen, dass die Zeiten für insbesondere die Herstellung des Präpolymers mittels Variation der Katalysatorkonzentration eingestellt und optimiert werden können. Die dabei freiwerdende Reaktionsenergie kann aufgrund des langen Zeitraums der ersten Vernetzung effektiv über die Oberfläche an die Umgebung abgegeben werden, so dass eine deutliche Aufheizung der Probe vermieden wird.

Ausführungsbeispiel 15 zeigt, dass die Verwendung verschiedener Katalysatoren für diesen zweistufigen Prozess möglich ist. Hierbei wird ein Material mit hohem Tg erhalten

Ausführungsbeispiel 5 zeigt eine praktische Anwendung des zweistufigen Härteprozesses unter Bildung eines intermediären Polyisocyanatpolymers für die Herstellung und Verwendung von Prepreg. Insbesondere die lange Lagerung unter Erhaltung der Eigenschaften des Prepreg machen eine industrielle Nutzung des Verfahrens sehr interessant.

## Patentansprüche

1. Verfahren zur Herstellung eines Halbzeugs, enthaltend die Schritte
a) Bereitstellen eines Reaktionsgemisches mit einem molaren Verhältnis von Isocyanatgruppen zu mit Isocyanat reaktiven Gruppen von wenigstens 3 : 1, enthaltend
(i) eine Polyisocyanatzusammensetzung A,
(ii) einen Katalysator B1, der die Reaktion von Isocyanatgruppen zu Uretdiongruppen katalysiert, und
(iii) einen Katalysator B2, der die Reaktion von Isocyanat- und Uretdiongruppen zu Isocyanuratgruppen katalysiert, wobei Katalysator B1 verschieden von Katalysator B2 ist;
b) Benetzen einer Faser, eines Gewebes, eines Geleges oder eines Gewirkes mit dem in Verfahrensschritt a) bereitgestellten Reaktionsgemisch; und
c) katalytische Polymerisation der Polyisocyanatzusammensetzung A zu einem Polyisocyanatpolymer C, welches eine Schicht auf der Faser, dem Gewebe, dem Gelege oder dem Gewirke bildet und **gekennzeichnet ist durch**
(i) die Anwesenheit von Uretdiongruppen; und
(ii) ein Modul G' des Polyisocyanatpolymer C bestimmt durch ein Platte/Platte-Rheometer gemäß ISO 6721-10:2015-09 bei 1/s bei 23°C von ≥ 1^{∗}10⁶ Pa;
wobei die katalytische Polymerisation bei einer Durchschnittstemperatur von höchstens 100 °C über einen Zeitraum von 30 min bis zu 14 Tagen geführt wird.

2. Verfahren zur Herstellung eines Verbundwerkstoffs mit einer Matrix, die einen Polyisocyanuratkunststoff enthält, enthaltend die Verfahrensschritte a) bis c) aus Anspruch 1 und zusätzlich einen Verfahrensschritt d) umfassen die katalytische Trimerisierung des Polyisocyanatpolymers C zu einem Polyisocyanuratkunststoff D bei einer Temperatur von wenigstens 100 °C, wobei diese Temperatur wenigstens 20 °C höher ist als die Temperatur, bei der die katalytische Polymerisation in Verfahrensschritt c) durchgeführt wurde.

3. Verfahren zur Herstellung eines Polyisocyanuratkunststoffs D enthaltend die Schritte
a) Bereitstellen eines Polyisocyanatpolymers C,
(i) enthaltend Uretdiongruppen;
(ii) enthaltend einen Katalysator B2, der die Reaktion von Uretdiongruppen zu Isocyanuratgruppen katalysiert; und
(iii) **gekennzeichnet durch** ein Modul G' bestimmt durch ein Platte/Platte-Rheometer gemäß ISO 6721-10:2015-09 bei 1/s bei 23°C von wenigstens 1^{∗}10⁶ Pa;
Erhalten oder erhältlich durch die Teilschritte
a1) Bereitstellen eines Reaktionsgemisches mit einem molaren Verhältnis von Isocyanatgruppen zu mit Isocyanat reaktiven Gruppen von wenigstens 3 : 1, enthaltend
(i) eine Polyisocyanatzusammensetzung A,
(ii) einen Katalysator B1, der die Reaktion von Isocyanatgruppen zu Uretdiongruppen katalysiert, und
(iii) einen Katalysator B2, der die Reaktion von Isocyanat- und Uretdiongruppen zu Isocyanuratgruppen katalysiert, wobei Katalysator B1 verschieden von Katalysator B2 ist; und
a2) katalytische Polymerisation der Polyisocyanatzusammensetzung A zu dem Polyisocyanatpolymer C;
wobei die Polymerisation zum Polyisocyanatpolymer C bei einer Durchschnittstemperatur von höchstens 100 °C über einen Zeitraum von 30 min bis zu 14 Tagen geführt wird
b) katalytische Trimerisierung des Polyisocyanatpolymers C zu einem Polyisocyanuratkunststoff D bei einer Temperatur zwischen 100 °C und 400 °C wobei diese Temperatur wenigstens 20 °C höher ist als die Temperatur, bei der die katalytische Polymerisation zur Herstellung des Polyisocyanatpolymers C durchgeführt wurde.

4. Das Verfahren nach Anspruch 3, wobei die in Verfahrensschritt a) erfolgende Bereitstellung des Polyisocyanatpolymers C an einem Ort erfolgt, der von dem Ort, an dem die katalytische Trimerisierung in Verfahrensschritt b) erfolgt, wenigstens 10 m entfernt ist.

5. Das Verfahren nach Anspruch 3 oder 4, wobei das in Verfahrensschritt a) bereitgestellte Polyisocyanatpolymer vor der Durchführung der katalytischen Trimerisierung in Verfahrensschritt b) umgeformt wird.

6. Das Verfahren nach einem der Ansprüche 1 bis 5, wobei der Anteil der aliphatisch und cycloaliphatisch gebundenen Isocyanatgruppen in der Polyisocyanatzusammensetzung A bezogen auf die Gesamtmenge aller darin enthaltenen Isocyanatgruppen wenigstens 80 mol-% beträgt.

7. Das Verfahren nach einem der Ansprüche 1 bis 6, wobei der Katalysator B2 bei Temperaturen von höchstens 60 °C im Vergleich zum Katalysator B1 einen Reaktionsgeschwindigkeitskoeffizienten der Umsetzung von Isocyanatgruppengruppen k(T)_{ISOB2} hat, der wenigstens um den Faktor 2 kleiner ist, als der Reaktionsgeschwindigkeitskoeffizient k(T)_{ISOB1}.

8. Das Verfahren nach einem der Ansprüche 1 bis 7, wobei das Polyisocyanatpolymer C eine Glasübergangstemperatur von höchstens 60 °C aufweist.

9. Isocyanuratkunststoff erhältlich durch das Verfahren gemäß eines der Ansprüche 3 bis 5.

10. Halbzeug, erhältlich gemäß Anspruch 1.

11. Verwendung des Verfahrens nach einem der Ansprüche 3 bis 5 zur Herstellung von Beschichtungen, Folien oder Formteilen enthaltend den Polyisocyanuratkunststoff D.

12. Beschichtungen, Folien, Halbzeuge oder Formteile enthaltend den Polyisocyanuratkunststoff D hergestellt nach dem Verfahren nach einem der Ansprüche 3 bis 5.

## Claims

1. Process for producing a semifinished product, comprising the steps of
a) providing a reaction mixture having a molar ratio of isocyanate groups to isocyanate-reactive groups of at least 3:1, containing
(i) a polyisocyanate composition A,
(ii) a catalyst B1 that catalyzes the reaction of isocyanate groups to give uretdione groups, and
(iii) a catalyst B2 that catalyzes the reaction of isocyanate and uretdione groups to give isocyanurate groups, wherein catalyst B1 is different than catalyst B2;
b) wetting a fiber, a woven fabric, a nonwoven scrim or a knit with the reaction mixture provided in process step a); and
c) catalytically polymerizing the polyisocyanate composition A to give a polyisocyanate polymer C that forms a layer on the fiber, the woven fabric, the nonwoven scrim or the knit and is **characterized by**
(i) the presence of uretdione groups; and
(ii) a modulus G' of the polyisocyanate polymer C determined by a plate/plate rheometer to ISO 6721-10:2015-09 at 1/s at 23°C of ≥ 1*10⁶ Pa;
wherein the catalytic polymerization is conducted at an average temperature of not more than 100°C over a period of 30 min up to 14 days.

2. Process for producing a composite material having a matrix comprising a polyisocyanurate plastic, comprising process steps a) to c) from Claim 1 and additionally a process step d) comprising the catalytic trimerization of the polyisocyanate polymer C to give a polyisocyanurate plastic D at a temperature of at least 100°C, this temperature being at least 20°C higher than the temperature at which the catalytic polymerization was performed in process step c).

3. Process for producing a polyisocyanurate plastic D, comprising the steps of
a) providing a polyisocyanate polymer C,
(i) containing uretdione groups;
(ii) containing a catalyst B2 that catalyzes the reaction of uretdione groups to give isocyanurate groups; and
(iii) **characterized by** a modulus G' determined by a plate/plate rheometer to ISO 6721-10:2015-09 at 1/s at 23°C of at least 1*10⁶ Pa;
obtained or obtainable by the component steps of
a1) providing a reaction mixture having a molar ratio of isocyanate groups to isocyanate-reactive groups of at least 3:1, containing
(i) a polyisocyanate composition A,
(ii) a catalyst B1 that catalyzes the reaction of isocyanate groups to give uretdione groups, and
(iii) a catalyst B2 that catalyzes the reaction of isocyanate and uretdione groups to give isocyanurate groups, wherein catalyst B1 is different than catalyst B2; and
a2) catalytically polymerizing the polyisocyanate composition A to give the polyisocyanate polymer C;
wherein the polymerization to give the polyisocyanate polymer C is conducted at an average temperature of not more than 100°C over a period of 30 min up to 14 days,
b) catalytically trimerizing the polyisocyanate polymer C to give a polyisocyanurate plastic D at a temperature between 100°C and 400°C, this temperature being at least 20°C higher than the temperature at which the catalytic polymerization to prepare the polyisocyanate polymer C was performed.

4. The process according to Claim 3, wherein the polyisocyanate polymer C is provided in process step a) at a site at least 10 m removed from the site at which the catalytic trimerization in process step b) is effected.

5. The process according to Claim 3 or 4, wherein the polyisocyanate polymer provided in process step a) is reshaped prior to the performance of the catalytic trimerization in process step b).

6. The process according to any of Claims 1 to 5, wherein the proportion of aliphatically and cycloaliphatically bonded isocyanate groups in the polyisocyanate composition A based on the total amount of all isocyanate groups present therein is at least 80 mol%.

7. The process according to any of Claims 1 to 6, wherein the catalyst B2, at temperatures of not more than 60°C, by comparison with the catalyst B1, has a reaction rate coefficient for the conversion of isocyanate groups k(T)_{ISOB2} that is at least a factor of 2 less than the reaction rate coefficient k(T)_{ISOB1}.

8. The process according to any of Claims 1 to 7, wherein the polyisocyanate polymer C has a glass transition temperature of not more than 60°C.

9. Isocyanurate plastic obtainable by the process according to any of Claims 3 to 5.

10. Semifinished product obtainable according to Claim 1.

11. Use of the process according to any of Claims 3 to 5 for production of coatings, films or moldings comprising the polyisocyanurate plastic D.

12. Coatings, films, semifinished products or moldings comprising the polyisocyanurate plastic D produced by the process according to any of Claims 3 to 5.

## Revendications

1. Procédé pour la fabrication d'un produit semi-fini, comprenant les étapes
a) préparation d'un mélange réactionnel présentant un rapport molaire de groupes isocyanate à des groupes réactifs avec isocyanate d'au moins 3:1, contenant
(i) une composition de polyisocyanate A,
(ii) un catalyseur B1, qui catalyse la réaction de groupes isocyanate en groupes uretdione et
(iii) un catalyseur B2, qui catalyse la réaction de groupes isocyanate et de groupes uretdione en groupes isocyanurate, le catalyseur B1 étant différent du catalyseur B2 ;
b) mouillage d'une fibre, d'un tissu, d'un mat ou d'un tricot par le mélange réactionnel préparé dans l'étape de procédé a) ; et
c) polymérisation catalytique de la composition de polyisocyanate A en un polymère de polyisocyanate C qui forme une couche sur la fibre, le tissu, le mat ou le tricot et **caractérisé par**
(i) la présence de groupes uretdione ; et
(ii) un module G' du polymère de polyisocyanate C, déterminé par un rhéomètre plaque/plaque selon la norme ISO 6721-10:2015-09 à 1/s et à 23°C, de 1*10⁶ Pa ;
la polymérisation catalytique étant réalisée à une température moyenne d'au plus 100°C sur une période de 30 minutes à 14 jours.

2. Procédé pour la préparation d'un matériau composite présentant une matrice, qui contient un matériau synthétique à base de polyisocyanurate, comprenant les étapes de procédé a) à c) de la revendication 1 et en outre une étape de procédé d) comprenant la trimérisation catalytique du polymère de polyisocyanate C en un matériau synthétique à base de polyisocyanurate D à une température d'au moins 100°C, cette température étant supérieure d'au moins 20°C à la température à laquelle la polymérisation catalytique dans l'étape de procédé c) a été réalisée.

3. Procédé pour la préparation d'un matériau synthétique à base de polyisocyanurate D, comprenant les étapes
a) préparation d'un polymère de polyisocyanate C,
(i) contenant des groupes uretdione ;
(ii) contenant un catalyseur B2, qui catalyse la réaction de groupes uretdione en groupes isocyanurate ; et
(iii) **caractérisé par** un module G', déterminé par un rhéomètre plaque/plaque selon la norme ISO 6721-10:2015-09 à 1/s et à 23°C, d'au moins 1*10⁶ Pa ;
obtenu ou pouvant être obtenu par les étapes partielles
a1) préparation d'un mélange réactionnel présentant un rapport molaire de groupes isocyanate à des groupes réactifs avec isocyanate d'au moins 3:1, contenant
(i) une composition de polyisocyanate A,
(ii) un catalyseur B1, qui catalyse la réaction de groupes isocyanate en groupes uretdione et
(iii) un catalyseur B2, qui catalyse la réaction de groupes isocyanate et de groupes uretdione en groupes isocyanurate, le catalyseur B1 étant différent du catalyseur B2 ; et
a2) polymérisation catalytique de la composition de polyisocyanate A en polymère de polyisocyanate C ;
la polymérisation en polymère de polyisocyanate C étant réalisée à une température moyenne d'au plus 100°C sur une période de 30 minutes à 14 jours,
b) trimérisation catalytique du polymère de polyisocyanate C en un matériau synthétique à base de polyisocyanurate D à une température entre 100°C et 400°C, cette température étant supérieure d'au moins 20°C à la température à laquelle la polymérisation catalytique pour la préparation du polymère de polyisocyanate C a été réalisée.

4. Procédé selon la revendication 3, la préparation du polymère de polyisocyanate C qui a lieu dans l'étape de procédé a) ayant lieu en un site qui est éloigné d'au moins 10 m du site où a lieu la trimérisation catalytique dans l'étape de procédé b).

5. Procédé selon la revendication 3 ou 4, le polymère de polyisocyanate préparé dans l'étape de procédé a) étant façonné avant la réalisation de la trimérisation catalytique dans l'étape de procédé b).

6. Procédé selon l'une quelconque des revendications 1 à 5, la proportion de groupes isocyanate liés de manière aliphatique et cycloaliphatique dans la composition de polyisocyanate A, par rapport à la quantité totale de tous les groupes isocyanate qui y sont contenus, étant d'au moins 80% en mole.

7. Procédé selon l'une quelconque des revendications 1 à 6, le catalyseur B2 présentant, à des températures d'au plus 60°C, par rapport au catalyseur B1, un coefficient de vitesse de réaction de la transformation des groupes isocyanate k(T)_{ISOB2} qui est inférieur au moins d'un facteur 2 au coefficient de vitesse de réaction k(T)_{ISOB1}.

8. Procédé selon l'une quelconque des revendications 1 à 7, le polymère de polyisocyanate C présentant une température de transition vitreuse d'au plus 60°C.

9. Matériau synthétique à base d'isocyanurate pouvant être obtenu par le procédé selon l'une quelconque des revendications 3 à 5.

10. Produit semi-fini, pouvant être obtenu selon la revendication 1.

11. Utilisation du procédé selon l'une quelconque des revendications 3 à 5 pour la fabrication de revêtements, de feuilles ou de pièces façonnées contenant le matériau synthétique à base de polyisocyanurate D.

12. Revêtements, feuilles, produits semi-finis ou pièces façonnées contenant le matériau synthétique à base de polyisocyanurate D préparé selon le procédé selon l'une quelconque des revendications 3 à 5.
